# EUROPEAN PATENT APPLICATION

(11) **EP 1 376 003 A1**
(43) Date of publication of application: **02.01.2004**
(21) Application number: 02714460.9
(22) Date of filing: 04.04.2002
(51) Int. Cl.: F21S 2/00, G02B 6/00, F21W 101/00, F21Y 101/02

(54) **LINEAR LIGHT EMITTER AND METHOD OF MANUFACTURING THE LIGHT EMITTER**

(30) Priority: 05.04.2001 JP 2001107656; 05.04.2001 JP 2001107655; 10.04.2001 JP 2001111001; 10.04.2001 JP 2001111002; 10.04.2001 JP 2001111003; 04.06.2001 JP 2001168117; 10.10.2001 JP 2001312613
(71) Applicant: BRIDGESTONE CORPORATION, Tokyo 104-0031 (JP)
(72) Inventor: TAZAWA, Hare, Kodaira-shi, Tokyo 187-0031 (JP); SUGIYAMA, Hideo, Higashimurayama-shi, Tokyo 189-0023 (JP); TANUMA, Itsuo, Sayama-shi, Saitama 350-1335 (JP)
(74) Representative: Whalley, Kevin
(86) International application number: PCT/JP2002/003385
(87) International publication number: WO 2002/081964

(57) **Abstract**

A subject is to provide a high-performance linear light emitter in which an angle distribution of exiting light in a peripheral direction is optimized, and which can radiate light from a side peripheral surface with high directivity and without loss. There is an aspect of making a line width of a light reflecting layer appropriate in a translucent rod-shaped body which has a light incident portion at least at one end thereof and which has, on a peripheral side surface running along an axial direction, the light reflecting layer reflecting incident light from the light incident portion. An aspect, in which an angle of a light reflecting groove, surface roughness, or the like is made appropriate in a translucent rod-shaped body which has a light incident portion at least at one end thereof and which has, on a peripheral side surface running along an axial direction, a light reflecting groove reflecting incident light from the light incident portion, is used.

## Description

### Technical Field

The present invention relates to a linear light emitter which can radiate light from a side peripheral surface with high directivity and without loss, and in particular, relates to a linear light emitter which is suitable as a lamp for a vehicle such as a vehicle interior light, a taillight of a vehicle or the like, and to a method of manufacturing the light emitter.

### Background Technology

Conventionally, neon tubes, fluorescent tubes, and the like have been known as light emitters by which linear emitted light can be obtained. These neon tubes and fluorescent tubes require high voltage, and there is the danger of electric shock and electric leakage. Therefore, they cannot be used, for example, in the water or in places exposed to rain, or in places exposed to snow. Moreover, because neon tubes and fluorescent tubes are formed by glass tubes, they could not be used in places where there is the concern that a person or a vehicle or the like would physically collide with them and break them. Further, in cases in which they are used in a shape bent in the form of a curved surface, glassworking conforming to the curvature thereof is required and veteran skill is needed, which leads to an increase in costs as a result. Further, because the electric power consumed by a neon tube or a fluorescent tube is about several tens of W per 1 m which is large, when they are used over a long period of time, there is the problem that they cannot be used if not in a place where a commercial power source can be used.

In recent years, structures in which plastic optical fibers or light transmitting tubes, in which a transparent core liquid or a flexible transparent polymer is filled in a flexible tube, are twisted together have been proposed as structures for overcoming these problems.

Namely, the aforementioned proposals are structures in which light exiting from a light source is made incident on the light transmitting tubes or the like, and light is made to exit from the tube side surfaces along a length of several tens of meters. The light source and the light emitting portion can be separated. Therefore, they can be used in water or outside, or even in environments in which there is the fear of explosion. Moreover, there is no danger of breakage, and further, complex and bothersome processings such as glassworking or the like are not needed, and they are structures having a good ability to be put into operation.

However, such light transmitting tubes and the like are structures which emit light over a length of about several tens of m. The light emitting efficiency of the side surfaces is poor, and a high electric power light source of about 50 to 250 W is needed in order to increase the intensity. Further, for the purpose of side surface light emission, there is the need for measures for protecting the light source when used in water or outside or in an environment in which there is the fear of explosion. Accompanying this, problems arise in that the light source device itself becomes large, and places for the accommodation thereof are greatly limited.

On the other hand, as a linear light emitter which radiates light from a side peripheral surface, in recent years, attention has focused on light transmitting tubes which have a tubular clad and a core structured by a material having a higher refractive index than the structural material of the tubular clad, and a strip-shaped reflective layer is formed along the lengthwise direction of the tubular clad between the tubular clad and the core, and the light passing through the core is reflected/scattered at the reflective layer and radiated from the tubular clad side peripheral surface at the side opposite the side at which the reflective layer is formed. Moreover, in order to make the emitted light amount from the side peripheral surface of the linear light emitter uniform in the longitudinal direction, changing of the width of the strip-shaped reflective layer in the lengthwise direction also has been proposed (Japanese Patent Application Laid-Open (JP-A) No. 2000-39519).

At the light transmitting tube, the reflective layer is formed in a strip-shape along the lengthwise direction of the tube between the tubular clad and the core. The strong light, whose light amount is the greatest and which passes through the interior of the core, is reflected by this strip-shaped reflective layer and is radiated as strong light having high directivity from the tube side peripheral surface at the side opposite the reflective layer. As a result, the intensity is markedly high, and the structure is extremely bright.

However, in the conventional linear light emitter, the directivity of the exiting light cannot be increased in a predetermined direction. Therefore, the intensity visual field angle characteristic is somewhat inferior, and the current situation is that a structure having sufficiently satisfactory performances has not yet been proposed.

In light of this situation, the subject of the present invention is the resolution of many of the problems in the conventional art, and the achievement of the following object.

Namely, the object of the present invention is to provide a high performance linear light emitter in which the angle distribution of exiting light in the peripheral direction in particular is optimized, and which can radiate light from a side peripheral surface thereof with high directivity and without loss, and a method of manufacturing the light emitter.

### Disclosure of the Invention

A first aspect of a linear light emitter of the present invention is characterized in that, in a linear light emitter having at least a translucent rod-shaped body which has a light incident portion at least at one end and which has, on a peripheral side surface running along an axial direction, a light reflecting layer reflecting incident light from the light incident portion,
the light emitter comprises at least a translucent rod-shaped body satisfying a following formula 0.01 ≤ LW/LC ≤ 0.2, given that a length of an outer periphery is LC (mm) and a line width of the light reflecting layer is LW (mm) in a cross-section orthogonal to an axial direction of an inner peripheral surface of the translucent rod-shaped body.

In accordance with the linear light emitter relating to the first aspect, the linear light emitter has at least a translucent rod-shaped body which has a light incident portion at least at one end and which has, on a peripheral side surface running along an axial direction, a light reflecting layer reflecting incident light from the light incident portion, and due to the following formula 0.01 ≤ LW/LC ≤ 0.2 being satisfied given that a length of an outer periphery is LC (mm) and a line width of the light reflecting layer is LW (mm) in a cross-section orthogonal to an axial direction of an inner peripheral surface of the translucent rod-shaped body, the angle distribution of exiting light in the peripheral direction is optimized, and strong, linear light which has high directivity and is substantially orthogonal to the peripheral direction is obtained, and a linear light emitter which has excellent stability, heat-resistance, weatherability, and cost performance is obtained.

A second aspect of a linear light emitter of the present invention is characterized in that, in a linear light emitter having at least a translucent rod-shaped body which has a light incident portion at least at one end and which has, on a peripheral side surface running along an axial direction, a light reflecting groove reflecting incident light from the light incident portion,
an angle θ (°) formed by an axis orthogonal to an axial direction of the linear light emitter and a light incident surface at the light reflecting groove is 30 ≤ θ ≤ 60.

In accordance with the linear light emitter relating to the second aspect, the linear light emitter has at least a translucent rod-shaped body which has a light incident portion at least at one end and which has, on a peripheral side surface running along an axial direction, a light reflecting groove reflecting incident light from the light incident portion, and due to an angle θ (°) formed by an axis orthogonal to an axial direction of the linear light emitter and a light incident surface at the light reflecting groove being 30 ≤ θ ≤ 60, the angle distribution of exiting light in the axial direction is optimized, and strong, linear light which has high directivity and is substantially orthogonal to the axial direction is obtained, and a linear light emitter which has excellent stability, heat-resistance, weather-resistance, and cost performance is obtained.

A third aspect of a linear light emitter of the present invention is
characterized in that, in a linear light emitter having at least a translucent rod-shaped body which has a light incident portion at least at one end and at which a light reflecting groove, which has a light reflecting surface facing the light incident portion, is formed on a peripheral side surface running along an axial direction,
the light reflecting groove has groove walls at both ends of the light reflecting surface.

In accordance with the linear light emitter relating to the third aspect, the linear light emitter has at least a translucent rod-shaped body which has a light incident portion at least at one end and at which a light reflecting groove, which has a light reflecting surface facing the light incident portion, is formed on a peripheral side surface running along an axial direction, and due to the light reflecting groove having, at both ends, groove walls which intersect a groove floor (a so-called both-end-stopped groove), both the angle distribution of exiting light in the axial direction and the angle distribution of exiting light in the peripheral direction are optimized, and strong, linear light which has high directivity and is substantially orthogonal to the axial direction is obtained, and a linear light emitter which has excellent stability, heat-resistance, weatherability, and cost performance is obtained.

A fourth aspect of a linear light emitter of the present invention is characterized in that, in a linear light emitter having at least a translucent rod-shaped body which has a light incident portion at least at one end and at which a light reflecting groove, which has a light reflecting surface facing the light incident portion, is formed on a peripheral side surface running along an axial direction,
a surface roughness (Ra) of the light reflecting surface at the light reflecting groove is 0.5 µm or less.

In accordance with the linear light emitter relating to the fourth aspect, the linear light emitter has at least a translucent rod-shaped body which has a light incident portion at least at one end and at which a light reflecting groove, which has a light reflecting surface facing the light incident portion, is formed on a peripheral side surface running along an axial direction, and by making a surface roughness (Ra) of the light reflecting surface at the light reflecting groove be 0.5 µm or less and preferably 0.3 µm or less, the light reflecting surface can be made to approach a mirror finished surface, the directivity is increased, and in particular, the angle distribution of exiting light in the axial direction is optimized, and strong, linear light which has high directivity and is substantially orthogonal to the axial direction is obtained, and a linear light emitter which has excellent stability, heat-resistance, weatherability, and cost performance is obtained.

A fifth aspect of a linear light emitter of the present invention is characterized in that, in a linear light emitter having at least a translucent rod-shaped body which has a light incident portion at least at one end and at which a light reflecting groove, which has a light reflecting surface facing the light incident portion, is formed on a peripheral side surface running along an axial direction,
a light reflecting film is formed at the light reflecting groove of the translucent rod-shaped body and at a land portion other than the light reflecting groove, or a light reflecting film is formed at the light reflecting surface of the light reflecting groove or at the light reflecting surface after polishing.

In accordance with the linear light emitter relating to the fifth aspect, in a linear light emitter having at least a translucent rod-shaped body which has a light incident portion at least at one end and at which a light reflecting groove, which has a light reflecting surface facing the light incident portion, is formed on a peripheral side surface running along an axial direction, due to a light reflecting film being formed at the light reflecting groove of the translucent rod-shaped body and at a land portion other than the light reflecting groove, or a light reflecting film being formed at the light reflecting surface of the light reflecting groove or at the light reflecting surface after polishing, and in this case, in particular, due to the light reflecting film being formed by a metal film selected from silver, nickel, chromium, iron, titanium, gold, aluminum and alloys thereof, the light reflecting groove can be made to be a mirror finished surface, the directivity is increased, leakage of light toward the groove reverse surface can be prevented, the intensity can be markedly improved, the angle distribution of exiting light in the axial direction is optimized, strong, linear light which has high directivity and is substantially orthogonal to the axial direction is obtained, and a linear light emitter which has excellent stability, heat-resistance, weatherability, and cost performance is obtained.

A sixth aspect of a linear light emitter of the present invention is characterized in that, in a linear light emitter having at least a translucent rod-shaped body which has a light incident portion at least at one end and at which a light reflecting groove, which has a light reflecting surface facing the light incident portion, is formed on a peripheral side surface running along an axial direction,
a material having a refractive index higher than a refractive index of the translucent rod-shaped body is coated on the light reflecting surface at the light reflecting groove.

In accordance with the linear light emitter relating to the sixth aspect, the linear light emitter has at least a translucent rod-shaped body which has a light incident portion at least at one end and which has, on a peripheral side surface running along an axial direction, a light reflecting groove reflecting incident light from the light incident portion, and by coating, on a light reflecting surface at the light reflecting groove, a material having a refractive index higher than a refractive index of the translucent rod-shaped body, and in particular, a high refraction material selected from polystyrene (PS), polycarbonate (PC), tin-doped indium oxide (ITO), antimony-doped tin oxide (ATO), and aluminum-doped zinc oxide, the critical angle can be made large, leakage of light can be made small, the angle distribution of exiting light in the axial direction is optimized, strong, linear light which has high directivity and is substantially orthogonal to the axial direction is obtained, and a linear light emitter which has excellent stability, heat-resistance, weatherability, and cost performance is obtained.

A method of manufacturing a linear light emitter of the present invention is characterized in that, in a method of manufacturing a linear light emitter having at least a translucent rod-shaped body which has a light incident portion at least at one end and at which a light reflecting film is formed at a surface on a peripheral side surface running along an axial direction,
the method inserts a transfer film, at which a transferable light reflecting film layer is formed on a base film, into an injection molding mold for translucent rod-shaped body molding having, at an interior thereof, a configuration corresponding to the translucent rod-shaped body, and simultaneously with injection charging of a translucent rod-shaped body material, transfers the light reflecting film of the transfer film to the translucent rod-shaped body.

In accordance with the method of manufacturing a linear light emitter of the present invention, by inserting a transfer film, at which a transferable light reflecting film layer is formed on a base film, into an injection molding mold for translucent rod-shaped body molding having, at an interior thereof, a configuration corresponding to the translucent rod-shaped body, and simultaneously with injection charging of a translucent rod-shaped body material, transferring the light reflecting film of the transfer film to the translucent rod-shaped body, or by inserting a transfer film, at which a transferable light reflecting film layer is formed on a base film, into an injection molding mold for translucent rod-shaped body molding having, at an interior thereof, a configuration corresponding to the light reflecting groove of the translucent rod-shaped body, and simultaneously with injection charging of a translucent rod-shaped body material, transferring the light reflecting film of the transfer film to the translucent rod-shaped body, a process of forming the light reflecting film can be eliminated, mass production is possible, and cost reduction can be aimed for.

### Brief Description of the Drawings

FIG.1 is a schematic sectional view showing an example of a linear light emitter of the present invention.
FIG. 2 is an axial direction schematic sectional view of a translucent rod-shaped body.
FIG. 3 is a peripheral direction schematic sectional view of the translucent rod-shaped body.
FIG. 4 is a schematic sectional view showing one example of the translucent rod-shaped body.
FIG. 5A is a schematic sectional view for explaining the configuration of a light reflecting groove, and FIG. 5B is a perspective view for explaining the configuration of the light reflecting groove.
FIG. 6A is a schematic sectional view for explaining the configuration of the light reflecting groove, and FIG. 6B is a perspective view for explaining the configuration of the light reflecting groove.
FIG. 7 is a diagram for explaining an angle formed by a light incident surface of the light reflecting groove and an orthogonal axis.
FIG. 8A is a plan view showing an example of the light reflecting groove, and FIG. 8B is a side view.
FIG. 9A is a plan view showing an example of the light reflecting groove, and FIG. 9B is a side view.
FIG. 10 is a front view showing an example of the linear light emitter of the present invention.
FIG.11 is a front view showing an example of the linear light emitter of the present invention.
FIG. 12A is a diagram showing the state of light reflection of a light reflecting surface of the light reflecting groove on which a highly refractive material has been coated, and FIG.12B is an enlarged view of FIG.12A.
FIG.13A is a diagram expressing a state before molding in a method of manufacturing the linear light emitter, FIG.13B is a diagram showing a state at the time of molding, and FIG.13C is a diagram showing a state after molding.
FIG.14 is a perspective view showing a usage example in which the linear light emitter is disposed at a side surface of a headlight of an automobile.
FIG.15 is a partial enlarged view of the headlight portion of FIG. 14.
FIG.16 is a perspective view showing a usage example in which the linear light emitter is disposed at a reverse side of a retractable side mirror of an automobile.
FIG. 17 is a partial enlarged view of the side mirror portion of FIG. 16.
FIG.18 is a perspective view showing a usage example in which the linear light emitter is disposed at a back light of an automobile.
FIG. 19 is a partial enlarged view of the back light portion of FIG. 18.
FIG. 20 is a perspective view showing a usage example in which the linear light emitter formed in a ring shape is disposed at a headlight of an automobile.
FIG. 21A is an enlarged view of the linear light emitter of FIG. 20, and FIG. 21B is a side view of the linear light emitter of FIG. 20.
FIG. 22A is an enlarged view of the linear light emitter of FIG. 20, and FIG. 22B is a side view of the linear light emitter of FIG. 20.
FIG. 23 is a perspective view showing a usage example in which the linear light emitter is disposed at a side light of an automobile.
FIG. 24 is a partial enlarged view of the side portion of FIG. 23.
FIG. 25 is a schematic perspective view showing a high-mount stop lamp mounted to a rear portion of a conventional vehicle.
FIG. 26 is a schematic perspective view showing an example of a state in which the linear light emitter of the present invention is used as a high-mount stop lamp.
FIG. 27 is a graph showing the relationship between visual field angle and intensity of Example 1.
FIG. 28 is a graph showing the relationship between visual field angle and intensity of Example 1.
FIG. 29 is a graph showing the relationship between axial direction length and side surface intensity of Example 2.
FIG. 30 is a graph showing the relationship between axial direction length and side surface intensity of Example 2.
FIG. 31 is a graph showing the relationship between visual field angle and intensity of Example 3 and Comparative Example 2.
FIG. 32 is a graph showing the relationship between axial direction length and intensity of Example 3 and Comparative Example 2.
FIG. 33 is a graph showing the relationship between visual field angle and intensity of Example 4 and Comparative Example 4.
FIG. 34 is a graph showing the relationship between axial direction length and intensity of Example 4 and Comparative Example 4.
FIG. 35 is a graph showing the relationship between visual field angle and intensity of Example 5 and Comparative Example 6.
FIG. 36 is a graph showing the relationship between axial direction length and intensity of Example 5 and Comparative Example 6.
FIG. 37 is a graph showing the relationship between visual field angle and intensity of Example 6 and Comparative Example 8.
FIG. 38 is a graph showing the relationship between axial direction length and intensity of Example 6 and Comparative Example 8.
FIG. 39 is a graph showing the relationship between visual field angle and intensity of Example 7 and Comparative Example 9.
FIG. 40 is a graph showing the relationship between axial direction length and intensity of Example 7 and Comparative Example 9.
FIG. 41 is a graph showing the relationship between visual field angle and intensity of Example 8 and Comparative Example 10.
FIG. 42 is a graph showing the relationship between axial direction length and intensity of Example 8 and Comparative Example 10.
FIG. 43 is a graph showing a lengthwise direction intensity distribution of Example 9 and Comparative Example 11.
FIG. 44 is a graph showing a peripheral direction intensity distribution of Example 9 and Comparative Example 11.
FIG. 45 is a graph showing the relationship between axial direction length and intensity of Example 9 and Comparative Example 11.
FIG. 46 is a graph showing a lengthwise direction intensity distribution of Example 10 and Comparative Example 12.
FIG. 47 is a graph showing a peripheral direction intensity distribution of Example 10 and Comparative Example 12.
FIG. 48 is a graph showing the relationship between axial direction length and intensity of Example 10 and Comparative Example 12.

### Best Modes for Implementing the Invention

Hereinafter, the present invention will be described in further detail with reference to the drawings.

### <Linear Light Emitter Relating to First Aspect>

The linear light emitter relating to the first aspect of the present invention has at least a translucent rod-shaped body which has a light incident portion at least at one end and which has, on a peripheral side surface running along an axial direction, a light reflecting layer reflecting incident light from the light incident portion, and the light emitter comprises at least a translucent rod-shaped body satisfying a following formula 0.01 ≤ LW/LC ≤ 0.2, given that a length of an outer periphery is LC (mm) and a line width of the light reflecting layer is LW (mm) in a cross-section orthogonal to an axial direction of an inner peripheral surface of the translucent rod-shaped body.

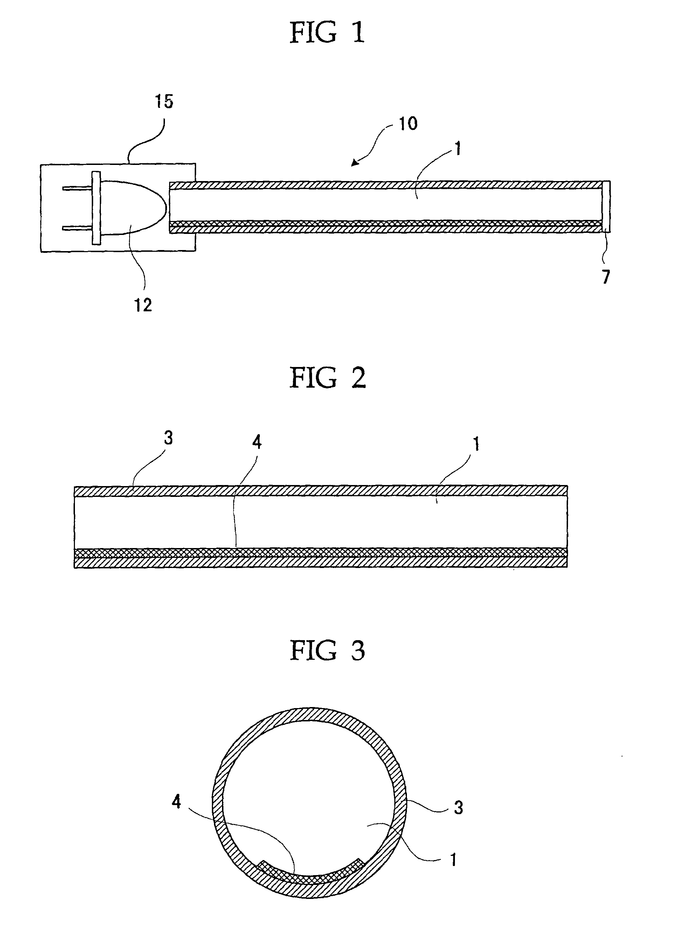

FIG.1 is a schematic sectional view showing an example of the linear light emitter. This linear light emitter 10 has a translucent rod-shaped body 1, a reflective body 7 provided at one longitudinal direction end of the translucent rod-shaped body 1, and a light source 12 such as an LED or the like disposed at the other end so as to face the reflective body 7. Note that 15 is a housing.

In this linear light emitter 10, the light source 12 (light emitter) is provided at only one end of the translucent rod-shaped body 1. In this case, it is preferable to provide the reflective body 7 at the other end surface. Note that, in the present invention, light sources can be provided at both ends of the translucent rod-shaped body 1.

In cross-section in a direction orthogonal to the axial direction of the translucent rod-shaped body 1, the configuration at the side (the lens portion) opposing a light reflecting groove side can be appropriately selected in accordance with the line width of the light reflecting layer, and the application, the purpose and the like of the linear light emitter, but is preferably either of a portion of a perfect circle or a portion of an oval.

The translucent rod-shaped body 1 is not particularly limited, and can be appropriately selected in accordance with the object. However, as shown in FIGS. 2 and 3, it preferably has the translucent rod-shaped body 1 having a light incident portion at least at one end thereof, a translucent clad 3 which has a lower refractive index than the translucent rod-shaped body 1 and which covers the translucent rod-shaped body, and a light reflecting layer 4 formed on the peripheral side surface running along the axial direction at the translucent rod-shaped body. Note that the light reflecting layer 4 may be formed in a state of slightly penetrating into the interior of the translucent rod-shaped body 1 from the surface of the translucent rod-shaped body 1.

In the present invention, given that the length of the outer periphery is LC (mm) and the line width of the light reflecting layer is LW (mm) in a cross-section orthogonal to the axial direction of the inner peripheral surface of the translucent rod-shaped body, the following formula 0.01≤ LW/LC ≤ 0.2 is satisfied, and in particular, it is preferable that 0.1≤ LW/LC ≤ 0.2.

When LW/LC is too small, little light is reflected, and therefore, the intensity is low. On the other hand, when LW/LC is too large, too much light is reflected, and the intensity is high. However, this is the case of a short distance from the light source, and at a place which is further from the light source, conversely, the intensity is low. In any case, optimization of the angle distribution of the peripheral direction exiting light cannot be achieved.

The line width LW of the light reflecting layer 4 differs in accordance with the diameter and the length of the translucent rod-shaped body and cannot be stipulated unconditionally, but is 0.1 mm to 50 mm, and preferably 0.5 mm to 20 mm, and is more preferably 1 mm to 10 mm.

Further, the line width W of the light reflecting layer is preferably adjusted so as to become gradually larger as the distance from the light incident portion becomes longer (the further away from the light source). Concretely, in a case in which a light source such as an LED or the like is disposed at one side, it is preferable that the further away from the light source, the broader the line width of the light reflecting layer. Moreover, in a case in which light sources such as LEDs or the like are disposed at both ends, it is preferable that the closer to the central portion of the linear light emitter, the broader the line width of the light reflecting layer.

Note that the light reflecting layer is not limited to one layer, and may be formed as plural layers.

At the linear light emitter which is structured in this way, total reflectance of the light entering in from the left end surface of the translucent rod-shaped body occurs at the boundary face between the translucent rod-shaped body and the clad layer. Due to the light reflecting layer, the loss from the side peripheral surface of the linear light emitter is low and the light is radiated efficiently. The intensity of the reflected light from the light reflecting layer in the direction orthogonal to the substantial center of the light reflecting layer in the cross-section orthogonal to the axial direction of the inner peripheral surface of the translucent rod-shaped body can achieve a high intensity of 200 cd/m² or more, and preferably 300 cd/m² or more, and more preferably 400 cd/m² or more.

Here, a transparent material having a refractive index which is higher than that of the material (clad material) forming the clad 3 is used as the material structuring the translucent rod-shaped body. Generally, the material is appropriately selected and used in accordance with the object from among plastics, elastomers, and the like.

Concretely, the material structuring the translucent rod-shaped body is preferably a solid shape. Examples include transparent materials such as polystyrene, styrene - methylmethacrylate copolymer, (meth)acrylic resin, polymethylpentene, aryl glycol carbonate resin, spiran resin, amorphous polyolefin, polycarbonate, polyamide, polyarylate, polysulfone, polyarylsulfone, polyether sulfone, polyether imide, polyimide, diarylphthalate, fluorine resins, polyester carbonate, norbomene resins (ARTON), alicyclic acrylic resins (optolets), silicone resins, acrylic rubber, silicone rubber, and the like. A single type thereof may be used alone or two or more types may be used in combination.

The clad material can be selected from among transparent materials whose refractive index is lower than that of the translucent rod-shaped body. Organic materials such as plastics, elastomers and the like are examples.

Examples of the clad material include polyethylene, polypropylene, polymethyl(meth)acrylate, fluorinated polymethyl(meth)acrylate, polyvinyl chloride, polyvinylidene chloride, polyvinyl acetate, polyethylene - vinyl acetate copolymer, polyvinyl alcohol, polyethylene - polyvinyl alcohol copolymer, fluorine resins, silicone resins, natural rubber, polyisoprene rubber, polybutadiene rubber, styrene - butadiene copolymer, butyl rubber, halogenated butyl rubber, chloroprene rubber, acrylic rubber, ethylene - propylene - diene copolymer (EPDM), acrylonitrile - butadiene copolymer, fluorine rubber, silicone rubber, and the like. A single type thereof may be used alone or two or more types may be used in combination.

Among the translucent rod-shaped body materials and clad materials, from the standpoints of the optical characteristics such as transparence, refractive index and the like, and workability and the like, as the translucent rod-shaped body material, polystyrene, polycarbonate, styrene - (meth)acrylic copolymers (MS polymers), and the like are preferable, and further, as the clad material, (meth)acrylic polymers and the like are preferable.

The diameter of the translucent rod-shaped body 1 is not particularly limited, and is usually about 2 mm to 30 mm, and in particular, about 5 mm to 15 mm is preferable. Moreover, the thickness of the clad 3 is usually 0.05 mm to 4 mm, and in particular, about 0.2 mm to 2 mm is preferable.

The light reflecting layer is preferably formed by a (meth)acrylic polymer containing a white pigment or a scattering agent.

Here, examples of the white pigment and the scattering agent are organic polymer particles such as silicone resin particles or polystyrene resin particles or the like, metal oxide particles such as Al₂O₃, TiO₂, SiO₂ and the like, sulfate particles such as BaSO₄ and the like, carbonate particles such as CaCO₃ and the like, and the like. A single type thereof may be used alone or two or more types may be used in combination.

When the reflection efficiency and the simultaneous extruding workability and the like are considered, the average particle diameter of the particles of the white pigment or the scattering agent are 0.1 µm to 200 µm, and in particular, 0.5 µm to 50 µm is preferable. Further, the amount of the white pigment or scattering agent contained in the reflective layer structuring material (the reflective material) is 0.5 % by mass to 20% by mass, and in particular, 1 % by mass to 10% by mass is preferable.

Note that, although not illustrated, a light reflecting protective layer may be formed on the outer surface of the translucent clad 3 so as to cover the light reflecting layer 4. If it is a linear light emitter at which such a light reflecting protective layer is formed, when there are defects such as pin holes or the like in the light reflecting layer, due to the light which leaks out to the reverse side of the light reflecting layer 4 and the light which leaks out from the side portions of the light reflecting layer 4 through these defect portions being reflected at the light reflecting protective layer, the loss of light can be decreased, and the intensity at the side opposite the light reflecting layer 4 can be increased even more.

As the structural material of the light reflecting protective layer, a material which does not transmit to the exterior the light which leaks from the light reflecting layer 4, and which efficiently reflects this light without absorbing it, is preferable. Concretely, metal foils of silver, aluminum, or the like, metal sheets, or coated films in which scattering particles which scatter light such as those described above are dispersed, and the like can be used.

The method for manufacturing the translucent rod-shaped body of the linear light emitter is not particularly limited. For example, it suffices to use a three-color extruder having three screws, and to introduce the translucent rod-shaped body material, the clad material, and the reflective material including a white pigment or a scattering agent into the extruder, and when, simultaneously, the translucent rod-shaped body material is extruded into a columnar shape, the reflective material is extruded into a strip-shape on the outer peripheral surface of the columnar translucent rod-shaped body, and the clad material is extruded in a tube shape covering the translucent rod-shaped body material and the reflective material, to vary the extruded amount of the reflective material by varying the rotational speed of the extruding screw or the like, and to extrude the light reflecting layer 4, which is strip-shaped and has different widths in the lengthwise direction, between the translucent rod-shaped body and the translucent clad 3.

In accordance with this method, three types of materials having different refractive indices and properties can be extruded simultaneously, and a laminated structure having three types of functions can be formed at one time. The molding speed is fast, and furthermore, the respective materials are laminated in a softened state. Therefore, the translucent rod-shaped body, in which there is excellent adhesion between the respective layers, can be manufactured efficiently.

In the case in which the light reflecting protective layer is formed, after the above-described extrusion molding, a metal foil or a metal sheet may be adhered, or a coating material in which scattering particles are dispersed may be coated. It is also possible to form the light reflecting protective layer by simultaneous extrusion.

In the present invention, among the end surfaces of the translucent rod-shaped body, the end surface facing the light source such as the LED or the like may be a roughened surface. The angle of intersection between this end surface and a vertical surface with respect to the translucent rod-shaped body is 50° or less, and preferably 10° to 50°, and more preferably 20° to 40°.

### <Linear Light Emitter Relating to Second Aspect>

The linear light emitter relating to the second aspect of the present invention has at least a translucent rod-shaped body which has a light incident portion at least at one end and which has, on a peripheral side surface running along an axial direction, a light reflecting groove reflecting incident light from the light incident portion, and an angle θ (°) formed by an axis orthogonal to an axial direction of the linear light emitter and a light incident surface at the light reflecting groove is 30≤ θ ≤ 60.

FIG.1 is a schematic sectional view showing an example of the linear light emitter. This linear light emitter 10 has the translucent rod-shaped body 1, the reflective body 7 provided at one longitudinal direction end of the translucent rod-shaped body 1, and the light source 12 such as an LED or the like disposed at the other end so as to face the reflective body 7. Note that 15 is the housing.

In this linear light emitter 10, the light source 12 (light emitter) is provided at only one end of the translucent rod-shaped body 1. In this case, it is preferable to provide the reflective body 7 at the other end surface. Note that, in the present invention, light sources can be provided at both ends of the translucent rod-shaped body 1.

In cross-section in a direction orthogonal to the axial direction of the translucent rod-shaped body, the configuration at the side (the lens portion) opposing a light reflecting groove side can be appropriately selected in accordance with the application, the purpose and the like of the linear light emitter, but is preferably either of a portion of a perfect circle or a portion of an oval.

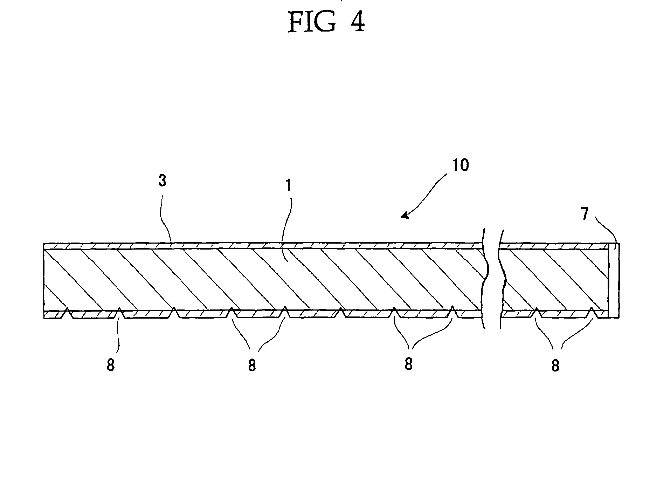

The translucent rod-shaped body 1 is not particularly limited, and can be variously selected in accordance with the object. However, as shown in FIG. 4, it preferably has the translucent rod-shaped body 1 having a light incident portion at least at one end thereof, and the translucent clad 3 which has a lower refractive index than the translucent rod-shaped body 1 and which covers the translucent rod-shaped body.

The diameter of the translucent rod-shaped body 1 is not particularly limited, and is usually about 2 mm to 30 mm, and in particular, about 5 mm to 15 mm is preferable. Moreover, the thickness of the translucent clad 3 is usually 0.05 mm to 4 mm, and in particular, about 0.2 mm to 2 mm is preferable.

A large number of light reflecting grooves 8, which reflect incident light from the light incident portion, are provided at the outer peripheral surface of the translucent rod-shaped body 1 so as to be spaced apart at predetermined intervals. The light reflecting grooves 8 are provided so as to pass through the clad 3 so as to reach the translucent rod-shaped body 1.

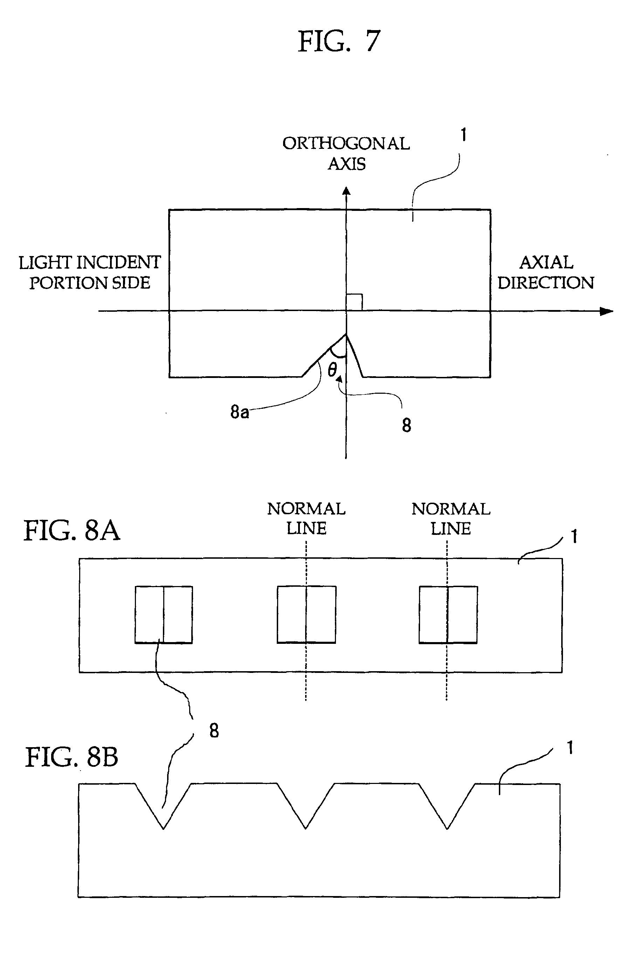

As shown in FIG. 7, at the light reflecting groove 8 of the linear light emitter, an angle θ (°) formed by the axis orthogonal to the axial direction of the translucent rod-shaped body 1 and a light incident surface 8a at the light reflecting groove is 30 ≤ θ ≤ 60, and preferably 40 ≤ θ ≤ 60, and more preferably 45 ≤ θ ≤ 55 is preferable.

When the angle θ is too small, the distribution of the exiting light is offset toward the light source side. On the other hand, when the angle θ is too large, the distribution of the exiting light is offset toward the other end side of the light source. In either case, the directivity is low, the intensity is low, and the object of the present invention cannot be achieved.

The cross-sectional configuration of the light reflecting groove 8 is preferably V-shaped or inverted cone-shaped, but does not necessarily have to be a shape having left-right symmetry in the normal line direction. It is preferable that the cross-sectional configuration be appropriately adjusted in accordance with the distance from the light incident portion, the number of light sources which are disposed, and the like.

Namely, in a case in which the light source is provided at one end of the translucent rod-shaped body, it is preferable that the angle θ (°) becomes gradually larger as the distance from the light incident portion becomes longer (the light incident surface of the light reflecting groove inclines more the more the distance from the light source increases). In this way, the emitted light amount distribution in the longitudinal direction of the linear light emitter is made uniform.

Accordingly, if the cross-sectional configuration of the light reflecting groove is a left-right symmetrical configuration in the normal line direction, the vertical angle of the light reflecting groove is 2 times the angle θ. However, as described above, cases in which the angle θ, which is formed by the normal line and the light reflecting surface of the light reflecting groove, differs are also included (in such cases, the vertical angle is not 2 times the angle θ). Note that the vertical angle of the light reflecting groove is preferably 60° to 120°, and in particular, a range of 90° to 110° is preferable.

Moreover, in a case in which light sources are provided at both ends of the translucent rod-shaped body, it is preferable that the light incident surface of the light reflecting groove inclines more the closer to the central portion of the translucent rod-shaped body. In this way, the emitted light amount distribution in the longitudinal direction of the linear light emitter is made uniform.

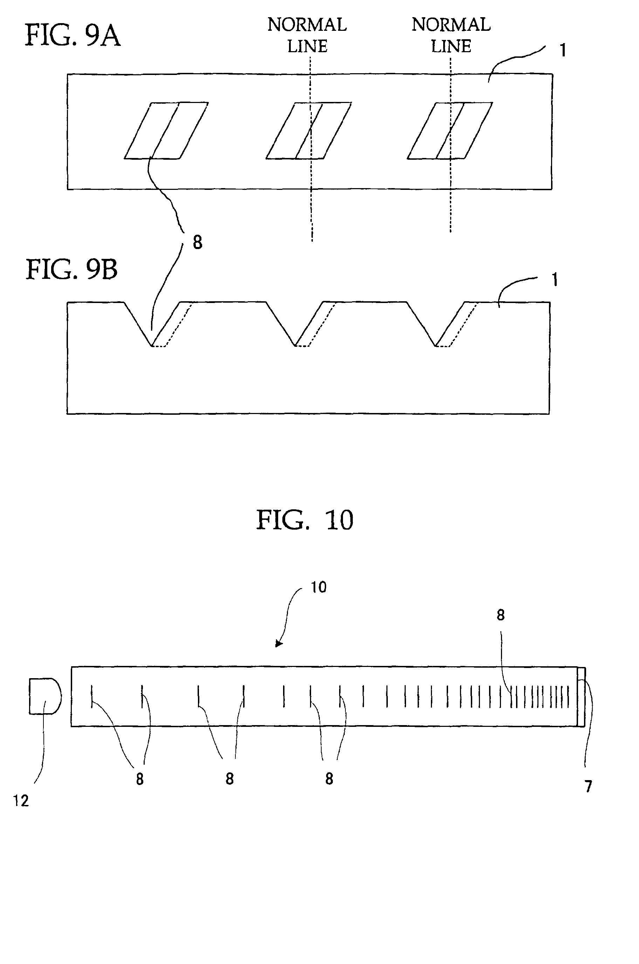

Usually, as shown in FIGS. 8A and 8B, the light reflecting groove 8 is formed so as to come to the position of the line normal to the axial direction of the translucent rod-shaped body 1. However, as shown in FIGS. 9A and 9B, the light reflecting groove can be formed at somewhat of an angle from the line normal to the axial direction of the translucent rod-shaped body 1. Note that, although not illustrated, the light reflecting groove 8 may have an angle in the opposite direction of that in FIGs. 9A and 9B.

In the present invention, as shown in FIG.10, in a case in which the light source 12 such as an LED or the like is disposed at one side, it is preferable that the density at which the light reflecting grooves 8 are disposed becomes greater the further away from the light source 12. In this way, the emitted light amount distribution in the longitudinal direction of the linear light emitter is easily made uniform.

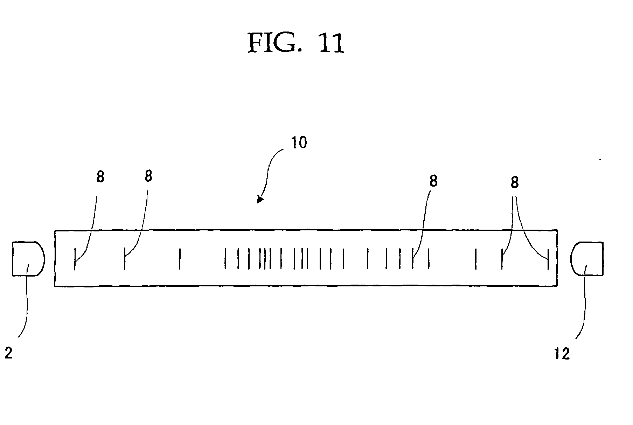

Further, as shown in FIG. 11, in a case in which the light sources 12,12 such as LEDs or the like are disposed at both ends, it is preferable that the density at which the light reflecting grooves 8 are disposed becomes greater the further toward the central portion of the linear light emitter. In this way, the emitted light amount distribution in the longitudinal direction of the linear light emitter is easily made uniform.

The width of the light reflecting groove is not particularly limited, but it is preferable that the width is 2 mm to 8 mm and that the depth of the groove is 0.1 mm to 5 mm.

In this case, in a case in which the light source such as an LED or the like is disposed at one side, it is preferable that the light reflecting groove width becomes broader and the groove depth becomes deeper the further away from the light source. Moreover, in a case in which light sources such as LEDs or the like are disposed at both ends, it is preferable that the light reflecting groove width becomes broader and the groove depth becomes deeper the further toward the central portion of the linear light emitter.

Moreover, the groove interval differs in accordance with conditions such as the position of the groove from the light source, the strength of the light source, whether the light source is provided at one end or both ends, the length of the translucent rod-shaped body, and the like. However, usually, it is preferable that the groove interval is 0.2 mm to 4 mm.

The light reflecting grooves can be prepared by electrical discharge machining or the like convex portions corresponding to the light reflecting grooves in the surface of a molding mold, and can be formed at the time of extrusion molding the translucent rod-shaped body. Further, they can also be formed by direct grinding.

At the linear light emitter which is structured in this way, the light from the light source entering in from the left end surface of the translucent rod-shaped body is scattered by the light reflecting grooves such that the loss from the side peripheral surface of the linear light emitter is low, and the light is side-surface-radiated efficiently. The intensity of the reflected light from the light reflecting grooves in the direction opposing the light reflecting grooves can achieve a high intensity of 500 cd/m² or more, and preferably 600 cd/m² or more, and more preferably 800 cd/m² or more.

Note that, because the translucent rod-shaped body material and the clad material are similar to those in the above-described first aspect, description thereof is omitted.

### <Linear Light Emitter Relating to Third Aspect>

The linear light emitter relating to the third aspect of the present invention has at least a translucent rod-shaped body which has a light incident portion at least at one end and at which a light reflecting groove, which has a light reflecting surface facing the light incident portion, is formed on a peripheral side surface running along an axial direction, and the light reflecting groove has groove walls at both ends of the light reflecting surface.

FIG.1 is a schematic sectional view showing an example of the linear light emitter. This linear light emitter 10 has the translucent rod-shaped body 1, the reflective body 7 provided at one longitudinal direction end of the translucent rod-shaped body 1, and the light source 12 such as an LED or the like disposed at the other end so as to face the reflective body 7. Note that 15 is the housing.

In this linear light emitter 10, the light source 12 (light emitter) is provided at only one end of the translucent rod-shaped body 1. In this case, it is preferable to provide the reflective body 7 at the other end surface. Note that, in the present invention, light sources can be provided at both ends of the translucent rod-shaped body 1.

In cross-section in a direction orthogonal to the axial direction of the translucent rod-shaped body 1, the configuration at the side (the lens portion) opposing a light reflecting groove side can be appropriately selected in accordance with the application, the purpose and the like of the linear light emitter, but is preferably either of a portion of a perfect circle or a portion of an oval.

The translucent rod-shaped body 1 is not particularly limited, and can be appropriately selected in accordance with the object. However, as shown in FIG. 4, it preferably has the translucent rod-shaped body 1 having a light incident portion at least at one end thereof, and the translucent clad 3 which has a lower refractive index than the translucent rod-shaped body 1 and which covers the translucent rod-shaped body.

A large number of light reflecting grooves 8, which reflect incident light from the light incident portion, are provided at the outer peripheral surface of the translucent rod-shaped body 1 so as to be spaced apart at predetermined intervals. The light reflecting grooves 8 are provided so as to pass through the clad 3 so as to reach the translucent rod-shaped body 1.

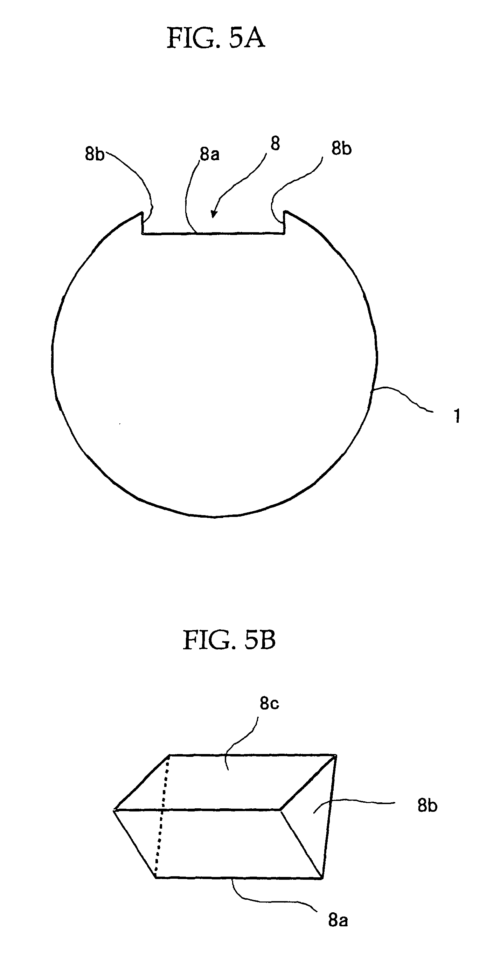

As shown in FIGS. 5A and 5B, the light reflecting groove 8 of the linear light emitter is a structure in which the light reflecting groove has, at both ends, groove walls 8b, 8b intersecting a groove floor 8a (namely, the both ends of the light reflecting groove are stopped). Further, the groove floor 8a extends substantially in the normal line direction with respect to the axial direction of the translucent rod-shaped body, and the groove walls 8b, 8b are preferably positioned substantially in the normal line direction with respect to the groove floor 8a.

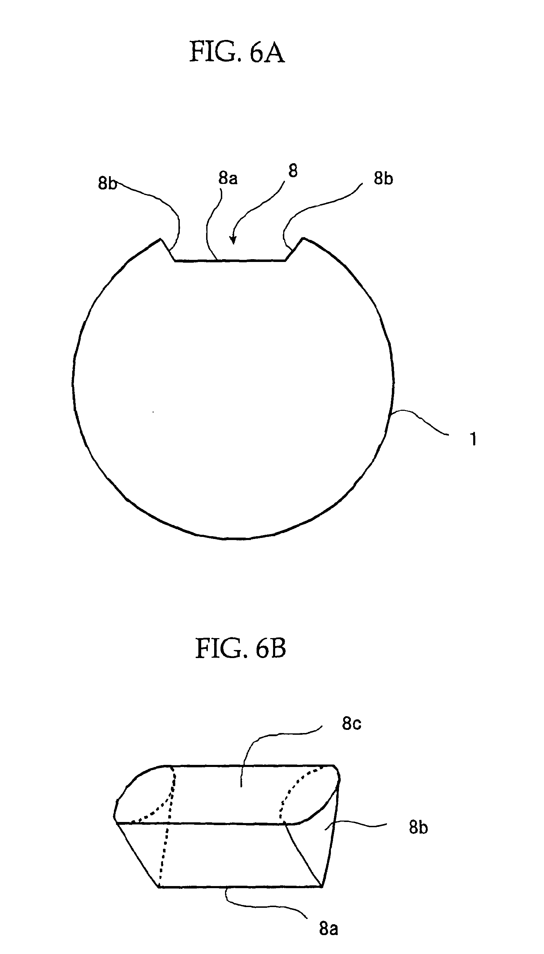

Further, as shown in FIGS. 6A and 6B, both ends of the groove may be inverted cone shapes, and the groove walls 8b, 8b may move away from the substantially normal line direction with respect to the groove floor 8a.

In this way, due to the light reflecting groove having, at both ends, the groove walls which intersect the groove floor, the groove width of the light reflecting groove 8 can be adjusted to be short. Optimization of both the exiting angle distribution in the peripheral direction and the exiting angle distribution in the axial direction is aimed for.

As shown in FIG. 7, at the light reflecting groove 8 of the linear light emitter, the angle θ (°) formed by the axis orthogonal to the axial direction of the linear light emitter and a light reflecting surface 8c at the light reflecting groove is preferably 30≤ θ ≤ 60, and more preferably 40 ≤ θ ≤ 60, and even more preferably 45 ≤ θ ≤ 55.

When the angle θ is too small, the distribution of the exiting light is offset toward the light source side. On the other hand, when the angle θ is too large, the distribution of the exiting light is offset toward the other end side of the light source. In either case, the directivity is low, the intensity is low, and there are cases in which the object of the present invention cannot be achieved.

The cross-sectional configuration of the light reflecting groove 8 is preferably V-shaped or inverted cone-shaped, but does not necessarily have to be a shape having left-right symmetry in the normal line direction. It is preferable that the cross-sectional configuration be appropriately adjusted in accordance with the distance from the light incident portion, the number of light sources which are disposed, and the like.

Namely, in a case in which the light source is provided at one end of the translucent rod-shaped body, it is preferable that the angle θ (°) becomes gradually larger as the distance from the light incident portion becomes longer (the light reflecting surface of the light reflecting groove inclines more the more the distance from the light source increases). In this way, the emitted light amount distribution in the longitudinal direction of the linear light emitter is made uniform.

Accordingly, if the cross-sectional configuration of the light reflecting groove is a left-right symmetrical configuration in the normal line direction, the vertical angle of the light reflecting groove is 2 times the angle θ. However, in the present invention, as described above, cases in which the angle θ, which is formed by the normal line of the light reflecting surface of each light reflecting groove, differs are also included. Therefore, the vertical angle of the light reflecting groove is preferably 60° to 120°, and in particular, a range of 90° to 110° is preferable.

Moreover, in a case in which light sources are provided at both ends of the translucent rod-shaped body, it is preferable that the light reflecting surface of the light reflecting groove inclines more the closer to the central portion of the translucent rod-shaped body. In this way, the emitted light amount distribution in the longitudinal direction of the linear light emitter is made uniform.

Usually, as shown in FIGS. 8A and 8B, the light reflecting groove 8 is formed so as to come to the position of the line normal to the axial direction of the translucent rod-shaped body 1. However, as shown in FIGS. 9A and 9B, the light reflecting groove can be formed at somewhat of an angle from the line normal to the axial direction of the translucent rod-shaped body 1. Note that, although not illustrated, the light reflecting groove 8 may have an angle in the opposite direction of that in FIGS. 9A and 9B.

In the present invention, as shown in FIG.10, in a case in which the light source 12 such as an LED or the like is disposed at one side, it is preferable that the density at which the light reflecting grooves 8 are disposed becomes greater the further away from the light source 12. In this way, the emitted light amount distribution in the longitudinal direction of the linear light emitter is easily made uniform.

Further, as shown in FIG. 11, in a case in which the light sources 12, 12 such as LEDs or the like are disposed at both ends, it is preferable that the density at which the light reflecting grooves 8 are disposed becomes greater the further toward the central portion of the linear light emitter. In this way, the emitted light amount distribution in the longitudinal direction of the linear light emitter is easily made uniform.

The width of the light reflecting groove is not particularly limited, but it is preferable that the width is 2 mm to 8 mm and that the depth of the groove is 0.1 mm to 5 mm.

In this case, in a case in which the light source such as an LED or the like is disposed at one side, it is preferable that the light reflecting groove width becomes broader and the groove depth becomes deeper the further away from the light source. Moreover, in a case in which light sources such as LEDs or the like are disposed at both ends, it is preferable that the light reflecting groove width becomes broader and the groove depth becomes deeper the further toward the central portion of the linear light emitter.

Moreover, the groove interval differs in accordance with conditions such as the position of the groove from the light source, the strength of the light source, whether the light source is provided at one end or both ends, the length of the translucent rod-shaped body, and the like. However, usually, it is preferable that the groove interval is 0.2 mm to 4 mm.

The light reflecting grooves can be prepared by electrical discharge machining or the like convex portions corresponding to the light reflecting grooves in the surface of a molding mold, and can be formed at the time of extrusion molding the translucent rod-shaped body. Further, they can also be formed by direct grinding.

At the linear light emitter which is structured in this way, the light entering in from the left end surface of the translucent rod-shaped body is scattered by the light reflecting grooves, which are stopped at both ends, such that the loss from the side peripheral surface of the linear light emitter is low, and the light is side-surface-radiated efficiently. The intensity of the reflected light from the light reflecting grooves in the direction opposing the light reflecting grooves can achieve a high intensity of 500 cd/m² or more, and preferably 600 cd/m² or more, and more preferably 800 cd/m² or more.

Note that, because the translucent rod-shaped body material and the clad material are similar to those in the above-described first aspect, description thereof is omitted.

### <Linear Light Emitter Relating to Fourth Aspect>

The linear light emitter relating to the fourth aspect of the present invention has at least a translucent rod-shaped body which has a light incident portion at least at one end and at which a light reflecting groove, which has a light reflecting surface facing the light incident portion, is formed on a peripheral side surface running along an axial direction, and a surface roughness (Ra) of the light reflecting surface at the light reflecting groove is 0.5 µm or less.

FIG. 1 is a schematic sectional view showing an example of the linear light emitter. This linear light emitter 10 has the translucent rod-shaped body 1, the reflective body 7 provided at one longitudinal direction end of the translucent rod-shaped body 1, and the light source 12 such as an LED or the like disposed at the other end so as to face the reflective body 7. Note that 15 is the housing.

In this linear light emitter 10, the light source 12 (light emitter) is provided at only one end of the translucent rod-shaped body 1. In this case, it is preferable to provide the reflective body 7 at the other end surface. Note that, in the present invention, light sources can be provided at both ends of the translucent rod-shaped body 1.

In cross-section in a direction orthogonal to the axial direction of the translucent rod-shaped body 1, the configuration at the side (the lens portion) opposing a light reflecting groove side can be appropriately selected in accordance with the application, the purpose and the like of the linear light emitter, but is preferably either of a portion of a perfect circle or a portion of an oval.

The translucent rod-shaped body 1 is not particularly limited, and can be appropriately selected in accordance with the object. However, as shown in FIG. 4, it preferably has the translucent rod-shaped body 1 having a light incident portion at least at one end thereof, and the translucent clad 3 which has a lower refractive index than the translucent rod-shaped body 1 and which covers the translucent rod-shaped body.

The diameter of the translucent rod-shaped body 1 is not particularly limited, and is usually about 2 mm to 30 mm, and in particular, about 5 mm to 15 mm is preferable. Moreover, the thickness of the translucent clad 3 is usually 0.05 mm to 4 mm, and in particular, about 0.2 mm to 2 mm is preferable.

A large number of the light reflecting grooves 8, which reflect incident light from the light incident portion, are provided at the outer peripheral surface of the translucent rod-shaped body 1 so as to be spaced apart at predetermined intervals. The light reflecting grooves 8 are provided so as to pass through the clad 3 so as to reach the translucent rod-shaped body 1.

As shown in FIGs. 5A and 5B, the light reflecting groove 8 of the linear light emitter is a structure in which the light reflecting groove has, at both ends, the groove walls 8b, 8b intersecting the groove floor 8a (namely, the both ends of the light reflecting groove are stopped). Further, the groove floor 8a extends substantially in the normal line direction with respect to the axial direction of the translucent rod-shaped body, and the groove walls 8b, 8b are preferably positioned substantially in the normal line direction with respect to the groove floor 8a.

Further, as shown in FIGS. 6A and 6B, both ends of the groove may be inverted cone shapes, and the groove walls 8b, 8b may move away from the substantially normal line direction with respect to the groove floor 8a.

In this way, due to the light reflecting groove having, at both ends, the groove walls which intersect the groove floor, the groove width of the light reflecting groove 8 can be adjusted to be short. Optimization the exiting angle distribution in the peripheral direction is aimed for.

As shown in FIG. 7, at the light reflecting groove 8 of the linear light emitter, the angle θ (°) formed by the axis orthogonal to the axial direction of the translucent rod-shaped body 1 and the light reflecting surface 8c at the light reflecting groove is preferably 30 ≤ θ ≤ 60, and more preferably 40 ≤ θ ≤ 60, and even more preferably 45 ≤ θ ≤ 55.

When the angle θ is too small, the distribution of the exiting light is offset toward the light source side. On the other hand, when the angle θ is too large, the distribution of the exiting light is offset toward the other end side of the light source. In either case, the directivity is low, the intensity is low, and there are cases in which the object of the present invention cannot be achieved.

The cross-sectional configuration of the light reflecting groove 8 is preferably V-shaped or inverted cone-shaped, but does not necessarily have to be a shape having left-right symmetry in the normal line direction. It is preferable that the cross-sectional configuration be appropriately adjusted in accordance with the distance from the light incident portion, the number of light sources which are disposed, and the like.

Namely, in a case in which the light source is provided at one end of the translucent rod-shaped body, it is preferable that the angle θ (°) becomes gradually larger as the distance from the light incident portion becomes longer (the light reflecting surface of the light reflecting groove inclines more the more the distance from the light source increases). In this way, the emitted light amount distribution in the longitudinal direction of the linear light emitter is made uniform.

Accordingly, if the cross-sectional configuration of the light reflecting groove is a left-right symmetrical configuration in the normal line direction, the vertical angle of the light reflecting groove is 2 times the angle θ. However, in the present invention, as described above, cases in which the angle θ, which is formed by the normal line of the light reflecting surface of each light reflecting groove, differs are also included. Therefore, the vertical angle of the light reflecting groove is preferably 60° to 120°, and in particular, a range of 90° to 110° is preferable.

Moreover, in a case in which light sources are provided at both ends of the translucent rod-shaped body, it is preferable that the light reflecting surface of the light reflecting groove inclines more the closer to the central portion of the translucent rod-shaped body. In this way, the emitted light amount distribution in the longitudinal direction of the linear light emitter is made uniform.

Usually, as shown in FIGS. 8A and 8B, the light reflecting groove 8 is formed so as to come to the position of the line normal to the axial direction of the translucent rod-shaped body 1. However, as shown in FIGS. 9A and 9B, the light reflecting groove can be formed at somewhat of an angle from the line normal to the axial direction of the translucent rod-shaped body 1. Note that, although not illustrated, the light reflecting groove 8 may have an angle in the opposite direction of that in FIGS. 9A and 9B.

In the present invention, as shown in FIG. 10, in a case in which the light source 12 such as an LED or the like is disposed at one side, it is preferable that the density at which the light reflecting grooves 8 are disposed becomes greater the further away from the light source 12. In this way, the emitted light amount distribution in the longitudinal direction of the linear light emitter is easily made uniform.

Further, as shown in FIG. 11, in a case in which the light sources 12,12 such as LEDs or the like are disposed at both ends, it is preferable that the density at which the light reflecting grooves 8 are disposed becomes greater the further toward the central portion of the linear light emitter. In this way, the emitted light amount distribution in the longitudinal direction of the linear light emitter is easily made uniform.

The width of the light reflecting groove is not particularly limited, but it is preferable that the width is 2 mm to 8 mm and that the depth of the groove is 0.1 mm to 5 mm.

In this case, in a case in which the light source such as an LED or the like is disposed at one side, it is preferable that the light reflecting groove width becomes broader and the groove depth becomes deeper the further away from the light source. Moreover, in a case in which light sources such as LEDs or the like are disposed at both ends, it is preferable that the light reflecting groove width becomes broader and the groove depth becomes deeper the further toward the central portion of the linear light emitter.

Moreover, the groove interval differs in accordance with conditions such as the position of the groove from the light source, the strength of the light source, whether the light source is provided at one end or both ends, the length of the translucent rod-shaped body, and the like. However, usually, it is preferable that the groove interval is 0.2 mm to 4 mm.

The light reflecting grooves can be prepared by electrical discharge machining or the like convex portions corresponding to the light reflecting grooves in the surface of a molding mold, and can be formed at the time of extrusion molding the translucent rod-shaped body. Further, they can also be formed by direct grinding.

In the present invention, the surface roughness (Ra) of the light reflecting surface at the light reflecting groove is 0.5 µm or less, and in particular, it is preferable that the surface roughness (Ra) is 0.3 µm or less. In this case, the lower limit value is not particularly limited, but is preferably 0.01 µm or more.

When the surface roughness (Ra) of the light reflecting surface at the light reflecting groove exceeds 0.5 µm, there is too much scattering in the lengthwise (or axial) direction of the rod, and the object and operational effects of the present invention cannot be achieved.

Note that the surface roughness (Ra) is measured in accordance with JIS B0601.

The method for achieving surface roughness of the light reflecting surface such as that described above can be achieved by carrying out polishing on the light reflecting groove. The method of polishing is not particularly limited, and the light reflecting groove can be finished to a desired surface roughness by sandpaper, a polishing material, or the like.

At the linear light emitter which is structured in this way, the light entering in from the left end surface of the translucent rod-shaped body is scattered by the light reflecting groove at which the surface roughness (Ra) of the light reflecting surface is 0.5 µm or less. The loss from the side peripheral surface of the linear light emitter is low, and the light is side-surface-radiated efficiently. The intensity of the reflected light from the light reflecting groove in the direction opposing the light reflecting groove can achieve a high intensity of 500 cd/m² or more, and preferably 600 cd/m² or more, and more preferably 800 cd/m² or more.

Note that, because the translucent rod-shaped body material and the clad material are similar to those in the above-described first aspect, description thereof is omitted.

### <Linear Light Emitter Relating to Fifth Aspect>

The linear light emitter relating to the fifth aspect of the present invention has at least a translucent rod-shaped body which has a light incident portion at least at one end and at which a light reflecting groove, which has a light reflecting surface facing the light incident portion, is formed on a peripheral side surface running along an axial direction, and a light reflecting film is formed at the light reflecting groove of the translucent rod-shaped body and at a land portion other than the light reflecting groove, or a light reflecting film is formed at the light reflecting surface of the light reflecting groove or at the light reflecting surface after polishing.

FIG. 1 is a schematic sectional view showing an example of the linear light emitter. This linear light emitter 10 has the translucent rod-shaped body 1, the reflective body 7 provided at one longitudinal direction end of the translucent rod-shaped body 1, and the light source 12 such as an LED or the like disposed at the other end so as to face the reflective body 7. Note that 15 is the housing.

In this linear light emitter 10, the light source 12 (light emitter) is provided at only one end of the translucent rod-shaped body 1. In this case, it is preferable to provide the reflective body 7 at the other end surface. Note that, in the present invention, light sources can be provided at both ends of the translucent rod-shaped body 1.

In cross-section in a direction orthogonal to the axial direction of the translucent rod-shaped body 1, the configuration at the side (the lens portion) opposing a light reflecting groove side can be appropriately selected in accordance with the application, the purpose and the like of the linear light emitter, but is preferably either of a portion of a perfect circle or a portion of an oval.

The translucent rod-shaped body 1 is not particularly limited, and can be variously selected in accordance with the object. However, as shown in FIG. 4, it preferably has the translucent rod-shaped body 1 having a light incident portion at least at one end thereof, and the translucent clad 3 which has a lower refractive index than the translucent rod-shaped body 1 and which covers the translucent rod-shaped body.

The diameter of the translucent rod-shaped body 1 is not particularly limited, and is usually about 2 mm to 30 mm, and in particular, about 5 mm to 15 mm is preferable. Moreover, the thickness of the translucent clad 3 is usually 0.05 mm to 4 mm, and in particular, about 0.2 mm to 2 mm is preferable.

A large number of the light reflecting grooves 8, which reflect incident light from the light incident portion, are provided at the outer peripheral surface of the translucent rod-shaped body 1 so as to be spaced apart at predetermined intervals. The light reflecting grooves 8 are provided so as to pass through the clad 3 so as to reach the translucent rod-shaped body 1.

As shown in FIGS. 5A and 5B, the light reflecting groove 8 of the linear light emitter is a structure in which the light reflecting groove has, at both ends, the groove walls 8b, 8b intersecting the groove floor 8a (namely, the both ends of the light reflecting groove are stopped). Further, the groove floor 8a extends substantially in the normal line direction with respect to the axial direction of the translucent rod-shaped body, and the groove walls 8b, 8b are preferably positioned substantially in the normal line direction with respect to the groove floor 8a.

Further, as shown in FIGS. 6A and 6B, both ends of the groove may be inverted cone shapes, and the groove walls 8b, 8b may move away from the substantially normal line direction with respect to the groove floor 8a.

In this way, due to the light reflecting groove having, at both ends, the groove walls which intersect the groove floor, the groove width of the light reflecting groove 8 can be adjusted to be short. Optimization the exiting angle distribution in the peripheral direction is aimed for.

As shown in FIG. 7, at the light reflecting groove 8 of the linear light emitter, the angle θ (°) formed by the axis orthogonal to the axial direction of the translucent rod-shaped body 1 and the light reflecting surface 8c at the light reflecting groove is preferably 30 ≤ θ ≤ 60, and more preferably 40 ≤ θ ≤ 60, and even more preferably 45 ≤ θ ≤ 55.

When the angle θ is too small, the distribution of the exiting light is offset toward the light source side. On the other hand, when the angle θ is too large, the distribution of the exiting light is offset toward the other end side of the light source. In either case, the directivity is low, the intensity is low, and there are cases in which the object of the present invention cannot be achieved.

The cross-sectional configuration of the light reflecting groove is preferably V-shaped or inverted cone-shaped, but does not necessarily have to be a shape having left-right symmetry in the normal line direction. It is preferable that the cross-sectional configuration be appropriately adjusted in accordance with the distance from the light incident portion, the number of light sources which are disposed, and the like.

Namely, in a case in which the light source is provided at one end of the translucent rod-shaped body, it is preferable that the angle θ (°) becomes gradually larger as the distance from the light incident portion becomes longer (the light reflecting surface of the light reflecting groove inclines more the more the distance from the light source increases). In this way, the emitted light amount distribution in the longitudinal direction of the linear light emitter is made uniform.

Accordingly, if the cross-sectional configuration of the light reflecting groove is a left-right symmetrical configuration in the normal line direction, the vertical angle of the light reflecting groove is 2 times the angle θ. However, in the present invention, as described above, cases in which the angle, which is formed by the normal line of the light reflecting surface of each light reflecting groove, differs are also included. Therefore, the vertical angle of the light reflecting groove is preferably 60° to 120°, and in particular, a range of 90° to 110° is preferable.

Moreover, in a case in which light sources are provided at both ends of the translucent rod-shaped body, it is preferable that the light reflecting surface of the light reflecting groove inclines more the closer to the central portion of the translucent rod-shaped body. In this way, the emitted light amount distribution in the longitudinal direction of the linear light emitter is made uniform.

Usually, as shown in FIGS. 8A and 8B, the light reflecting groove 8 is formed so as to come to the position of the line normal to the axial direction of the translucent rod-shaped body 1. However, as shown in FIGS. 9A and 9B, the light reflecting groove can be formed at somewhat of an angle from the line normal to the axial direction of the translucent rod-shaped body 1. Note that, although not illustrated, the light reflecting groove 8 may have an angle in the opposite direction of that in FIGS. 9A and 9B.

In the present invention, as shown in FIG. 10, in a case in which the light source 12 such as an LED or the like is disposed at one side, it is preferable that the density at which the light reflecting grooves 8 are disposed becomes greater the further away from the light source 12. In this way, the emitted light amount distribution in the longitudinal direction of the linear light emitter is easily made uniform.

Further, as shown in FIG.11, in a case in which the light sources 12,12 such as LEDs or the like are disposed at both ends, it is preferable that the density at which the light reflecting grooves 8 are disposed becomes greater the further toward the central portion of the linear light emitter. In this way, the emitted light amount distribution in the longitudinal direction of the linear light emitter is easily made uniform.

The width of the light reflecting groove is not particularly limited, but it is preferable that the width is 2 mm to 8 mm and that the depth of the groove is 0.1 mm to 5 mm.

In this case, in a case in which the light source such as an LED or the like is disposed at one side, it is preferable that the light reflecting groove width becomes broader and the groove depth becomes deeper the further away from the light source. Moreover, in a case in which light sources such as LEDs or the like are disposed at both ends, it is preferable that the light reflecting groove width becomes broader and the groove depth becomes deeper the further toward the central portion of the linear light emitter.

Moreover, the groove interval differs in accordance with conditions such as the position of the groove from the light source, the strength of the light source, whether the light source is provided at one end or both ends, the length of the translucent rod-shaped body, and the like. However, usually, it is preferable that the groove interval is 0.2 mm to 4 mm.

The light reflecting grooves can be prepared by electrical discharge machining or the like convex portions corresponding to the light reflecting grooves in the surface of a molding mold, and can be formed at the time of injection molding or extrusion molding the translucent rod-shaped body. Further, they can also be formed by direct grinding.

The light reflecting surface of the light reflecting groove is polished so as to approach a mirror finished surface.

In this case, the surface roughness (Ra) after polishing of the light reflecting surface at the light reflecting groove is 1.0 µm or less, and in particular, 0.5 µm or less is preferable. In this case, the lower limit value is not particularly limited, but is preferably 0.01 µm or more.

Note that the surface roughness (Ra) is measured in accordance with JIS B0601.

The method for achieving surface roughness of the light reflecting surface such as that described above can be achieved by carrying out polishing on the light reflecting groove. The method of polishing is not particularly limited, and the light reflecting groove can be finished to a desired surface roughness by sandpaper, a polishing material, or the like.

In the present invention, a light reflecting film is formed on the light reflecting surface after polishing as described above, or on the light reflecting surface which has not been subjected to polishing processing. Note that the light reflecting film may be formed not only on the light reflecting surfaces of the light reflecting grooves but on the entire light reflecting grooves, or may be formed on the light reflecting grooves and the land portions other than the light reflecting grooves. In this case, forming the light reflecting film at the light reflecting surface which has been subjected to polishing processing is preferable from the standpoint of preventing scattering in the rod lengthwise direction.

The light reflecting film is not particularly limited. For example, metal films selected from silver, nickel, chromium, iron, titanium, gold, aluminum, and alloys thereof are preferable. Thereamong, silver and aluminum are preferable.

The metal film is not particularly limited, and may be formed by a method such as deposition, coating of a reflective coating material, adhesion of a metal foil, or the like.

In forming the metal film, it is desirable to subject the light reflecting surface in advance to primer processing, adhesion processing by an adhesive, chemical processing, or oxidizing processing.

Note that the thickness of the metal film is not particularly limited, and usually, it is preferable that the thickness is 0.1 µm to 30 µm.

Further, as will be described later, the light reflecting film (metal film) can be formed, by an in-mold molding method, on the surface of the light reflecting groove simultaneously with the molding of the of the translucent rod-shaped body.

At the linear light emitter which is structured in this way, the light entering in from the left end surface of the translucent rod-shaped body is scattered by the light reflecting groove at which the light reflecting film is formed on the light reflecting surface. The loss from the side peripheral surface of the linear light emitter is low, and the light is side-surface-radiated efficiently. The intensity of the reflected light from the light reflecting groove in the direction opposing the light reflecting groove can achieve a high intensity of 500 cd/m² or more, and preferably 600 cd/m² or more, and more preferably 800 cd/m² or more.

Note that, because the translucent rod-shaped body material and the clad material are similar to those in the above-described first aspect, description thereof is omitted.

### <Linear Light Emitter Relating to Sixth Aspect>

The linear light emitter relating to the sixth aspect of the present invention has at least a translucent rod-shaped body which has a light incident portion at least at one end and at which a light reflecting groove, which has a light reflecting surface facing the light incident portion, is formed on a peripheral side surface running along an axial direction, and a material having a refractive index higher than a refractive index of the translucent rod-shaped body is coated on the light reflecting surface at the light reflecting groove.

FIG. 1 is a schematic sectional view showing an example of the linear light emitter. This linear light emitter 10 has the translucent rod-shaped body 1, the reflective body 7 provided at one longitudinal direction end of the translucent rod-shaped body 1, and the light source 12 such as an LED or the like disposed at the other end so as to face the reflective body 7. Note that 15 is the housing.

In this linear light emitter 10, the light source 12 (light emitter) is provided at only one end of the translucent rod-shaped body 1. In this case, it is preferable to provide the reflective body 7 at the other end surface. Note that, in the present invention, light sources can be provided at both ends of the translucent rod-shaped body 1.

In cross-section in a direction orthogonal to the axial direction of the translucent rod-shaped body 1, the configuration at the side (the lens portion) opposing a light reflecting groove side can be appropriately selected in accordance with the application, the purpose and the like of the linear light emitter, but is preferably either of a portion of a perfect circle or a portion of an oval.

The translucent rod-shaped body 1 is not particularly limited, and can be variously selected in accordance with the object. However, as shown in FIG. 4, it preferably has the translucent rod-shaped body 1 having a light incident portion at least at one end thereof, and the translucent clad 3 which has a lower refractive index than the translucent rod-shaped body 1 and which covers the translucent rod-shaped body.

The diameter of the translucent rod-shaped body 1 is not particularly limited, and is usually about 2 mm to 30 mm, and in particular, about 5 mm to 15 mm is preferable. Moreover, the thickness of the translucent clad 3 is usually 0.05 mm to 4 mm, and in particular, about 0.2 mm to 2 mm is preferable.

A large number of the light reflecting grooves 8, which reflect incident light from the light incident portion, are provided at the outer peripheral surface of the translucent rod-shaped body 1 so as to be spaced apart at predetermined intervals. The light reflecting grooves 8 are provided so as to pass through the clad 3 so as to reach the translucent rod-shaped body 1.

As shown in FIGS. 5A and 5B, the light reflecting groove 8 of the linear light emitter is a structure in which the light reflecting groove has, at both ends, the groove walls 8b, 8b intersecting the groove floor 8a (namely, the both ends of the light reflecting groove are stopped). Further, the groove floor 8a extends substantially in the normal line direction with respect to the axial direction of the translucent rod-shaped body, and the groove walls 8b, 8b are preferably positioned substantially in the normal line direction with respect to the groove floor 8a.

Further, as shown in FIGS. 6A and 6B, both ends of the groove may be inverted cone shapes, and the groove walls 8b, 8b may move away from the substantially normal line direction with respect to the groove floor 8a.

In this way, due to the light reflecting groove having, at both ends, the groove walls which intersect the groove floor, the groove width of the light reflecting groove 8 can be adjusted to be short. Optimization the exiting angle distribution in the peripheral direction is aimed for.

As shown in FIG. 7, at the light reflecting groove 8 of the linear light emitter, the angle θ (°) formed by the axis orthogonal to the axial direction of the linear light emitter and the light incident surface 8c at the light reflecting groove is preferably 30 ≤ θ ≤ 60, and more preferably 40 ≤ θ ≤ 60, and even more preferably 45 ≤ θ ≤ 55.

When the angle θ is too small, the distribution of the exiting light is offset toward the light source side. On the other hand, when the angle θ is too large, the distribution of the exiting light is offset toward the other end side of the light source. In either case, the directivity is low, the intensity is low, and there are cases in which the object of the present invention cannot be achieved.

The cross-sectional configuration of the light reflecting groove is preferably V-shaped or inverted cone-shaped, but does not necessarily have to be a shape having left-right symmetry in the normal line direction. It is preferable that the cross-sectional configuration be appropriately adjusted in accordance with the distance from the light incident portion, the number of light sources which are disposed, and the like.

Namely, in a case in which the light source is provided at one end of the translucent rod-shaped body, it is preferable that the angle θ (°) becomes gradually larger as the distance from the light incident portion becomes longer (the light incident surface of the light reflecting groove inclines more the more the distance from the light source increases). In this way, the emitted light amount distribution in the longitudinal direction of the linear light emitter is made uniform.

Accordingly, if the cross-sectional configuration of the light reflecting groove is a left-right symmetrical configuration in the normal line direction, the vertical angle of the light reflecting groove is 2 times the angle θ. However, in the present invention, as described above, cases in which the angle, which is formed by the normal line of the light reflecting surface of each light reflecting groove, differs are also included. Therefore, the vertical angle of the light reflecting groove is preferably 60° to 120°, and in particular, a range of 90° to 110° is preferable.

Moreover, in a case in which light sources are provided at both ends of the translucent rod-shaped body, it is preferable that the light incident surface of the light reflecting groove inclines more the closer to the central portion of the translucent rod-shaped body. In this way, the emitted light amount distribution in the longitudinal direction of the linear light emitter is made uniform.

Usually, as shown in FIGs. 8A and 8B, the light reflecting groove 8 is formed so as to come to the position of the line normal to the axial direction of the translucent rod-shaped body 1. However, as shown in FIGS. 9A and 9B, the light reflecting groove can be formed at somewhat of an angle from the line normal to the axial direction of the translucent rod-shaped body 1. Note that, although not illustrated, the light reflecting groove 8 may have an angle in the opposite direction of that in FIGS. 9A and 9B.

In the present invention, as shown in FIG.10, in a case in which the light source 12 such as an LED or the like is disposed at one side, it is preferable that the density at which the light reflecting grooves 8 are disposed becomes greater the further away from the light source 12. In this way, the emitted light amount distribution in the longitudinal direction of the linear light emitter is easily made uniform.

Further, as shown in FIG.11, in a case in which the light sources 12,12 such as LEDs or the like are disposed at both ends, it is preferable that the density at which the light reflecting grooves 8 are disposed becomes greater the further toward the central portion of the linear light emitter. In this way, the emitted light amount distribution in the longitudinal direction of the linear light emitter is easily made uniform.

The width of the light reflecting groove is not particularly limited, but it is preferable that the width is 2 mm to 8 mm and that the depth of the groove is 0.1 mm to 5 mm.

In this case, in a case in which the light source such as an LED or the like is disposed at one side, it is preferable that the light reflecting groove width becomes broader and the groove depth becomes deeper the further away from the light source. Moreover, in a case in which light sources such as LEDs or the like are disposed at both ends, it is preferable that the light reflecting groove width becomes broader and the groove depth becomes deeper the further toward the central portion of the linear light emitter.

Moreover, the groove interval differs in accordance with conditions such as the position of the groove from the light source, the strength of the light source, whether the light source is provided at one end or both ends, the length of the translucent rod-shaped body, and the like. However, usually, it is preferable that the groove interval is 0.2 mm to 4 mm.

The light reflecting grooves can be prepared by electrical discharge machining or the like convex portions corresponding to the light reflecting grooves in the surface of a molding mold, and can be formed at the time of extrusion molding the translucent rod-shaped body. Further, they can also be formed by direct grinding.

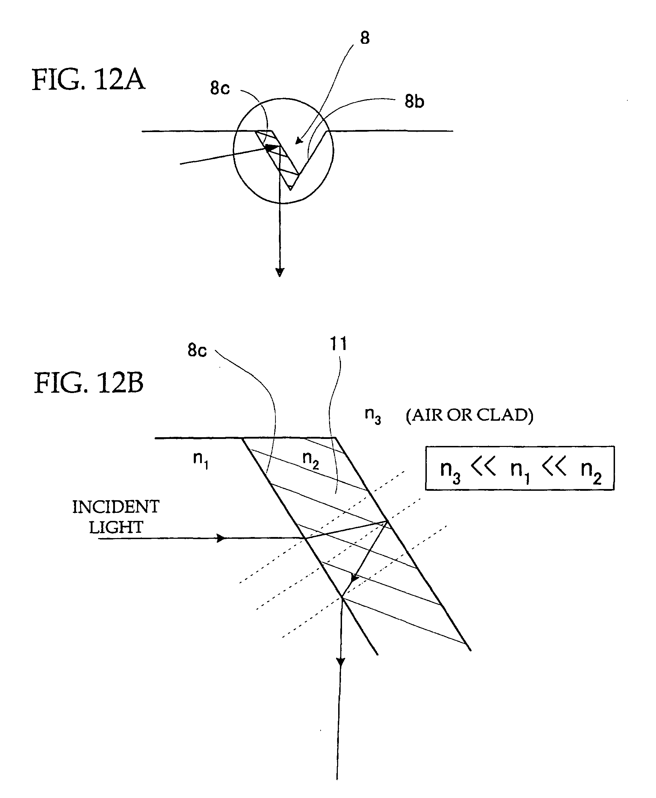

As shown in FIGs.12A and 12B, the difference in refractive indices between a refractive index n₁ of the translucent rod-shaped body and a layer 11 of a material having a refractive index n₂ which is higher than the refractive index n₁ of the translucent rod-shaped body is 0.05 or more, and in particular, 0.1 to 0.2 is preferable. Note that the high refraction material may be coated not only on the light reflecting surface 8c of the light reflecting groove, but also on the other surface 8b as well.

When the high refraction material is coated on the light reflecting surface 8c of the light reflecting groove in this way, the refractive index n₂ of the high refraction material 11 is large as compared with the refractive index n₁ of the core material. Thus, as shown in FIGs. 12A and 12B, the critical angle of the incident light from the light source can be made large, the leakage of light can be made small, and the loss can be made small. Note that, as shown in FIG. 12B, given that the refractive index of air or the clad is n₃, it is preferable that the refractive indices n₁ through n₃ satisfy the relationship n₃ << n₁ << n₂.

As the high refraction material, for example, at least one type selected from polystyrene (PS), polycarbonate (PC), tin-doped indium oxide (ITO), antimony-doped tin oxide (ATO), and aluminum-doped zinc oxide can be used.

The method for coating the high refraction material is not particularly limited, and if the material is polystyrene (PS) or polycarbonate (PC) or the like, the coating can be carried out by a method of coating it as is or coating a solution in which it is dissolved in a solvent, or the like. Further, in the case of tin-doped indium oxide (ITO), antimony-doped tin oxide (ATO), aluminum-doped zinc oxide and the like, the coating can be carried out by deposition, a method of coating a substance in which particulates thereof are compounded in a transparent resin, or the like.

Note that the coating of the high refraction material onto the light reflecting surface of the light reflecting groove is not particularly limited provided that it is a thickness which enables the incident light to be sufficiently refracted. Usually, it is 100 µm or less, and in particular, about 5 µm to 50 µm.

At the linear light emitter which is structured in this way, the light entering in from the left end surface of the translucent rod-shaped body is scattered by the light reflecting grooves, at which the high refraction material is coated, such that the loss from the side peripheral surface of the linear light emitter is low, and the light is side-surface-radiated efficiently. The intensity of the reflected light from the light reflecting grooves in the direction opposing the light reflecting grooves can achieve a high intensity of 500 cd/m² or more, and preferably 600 cd/m² or more, and more preferably 800 cd/m² or more.

Note that, because the translucent rod-shaped body material and the clad material are similar to those in the above-described first aspect, description thereof is omitted.

### <Method of Manufacturing Linear Light Emitter>

The method of manufacturing the linear light emitters relating to the first aspect through the sixth aspect of the present invention is not particularly limited, and can be appropriately enacted in accordance with the object. For example, the linear light emitter can be manufactured by an extrusion molding method of introducing the translucent rod-shaped body material into an extruder, extruding the translucent rod-shaped body material into a molding mold having, at the interior thereof, a columnar cavity, and as needed, simultaneously extruding the clad material in the shape of a tube which covers the translucent rod-shaped body.

In this case, in the linear light emitters relating to the first aspect through the sixth aspect, an interior of the translucent rod-shaped body molding mold has a configuration corresponding to the light reflecting grooves. In this way, the light reflecting grooves are formed on the peripheral side surface running along the axial direction of the translucent rod-shaped body. Then, the linear light emitter can be manufactured by forming a metal film (a light reflecting film) by a method such as deposition, coating of a reflective coating material, adhesion of metal foil or the like, onto the light reflecting groove as is or after polishing.

Further, as the method of manufacturing the linear light emitter relating to the above-described fifth aspect, a transfer film, in which a transferable light reflecting film layer is formed on a base film, is inserted into an injection molding mold for molding the translucent rod-shaped body, which has at the interior thereof a configuration corresponding to the translucent rod-shaped body, and simultaneously with the injection charging of the translucent rod-shaped body material, the light reflecting film of the transfer film is transferred to the translucent rod-shaped body (a so-called in-mold molding method).

In this case, it suffices to form the light reflecting grooves or to not form the light reflecting grooves at the translucent rod-shaped body. In a case in which the light reflecting grooves are formed, the light reflecting film is formed at the light reflecting grooves and at the land portions other than the light reflecting grooves. On the other hand, in a case in which the light reflecting grooves are not formed, only the light reflecting film is formed along the longitudinal direction of the outer peripheral surface of the translucent rod-shaped body.

Further, as another method of manufacturing the linear light emitter relating to the above-described fifth aspect, due to a transfer film, in which a transferable light reflecting film layer is formed on a base film, being inserted into an injection molding mold for molding the translucent rod-shaped body, which has at the interior thereof a configuration corresponding to the light reflecting grooves of the translucent rod-shaped body, and simultaneously with the injection charging of the translucent rod-shaped body material, the light reflecting film of the transfer film being transferred to the light reflecting grooves of the translucent rod-shaped body, the translucent rod-shaped body which has, at least at one end thereof, a light incident portion, and which has, on the peripheral side surface thereof running along the axial direction, light reflecting grooves at whose surfaces the light reflecting film is formed, is manufactured (the in-mold molding method). Note that, in accordance with this method, the light reflecting film is formed also at the land portions other than the light reflecting grooves.

In this case, the base film is not particularly limited, and polyethylene terephthalate (PET) or the like is preferable. As the light reflecting film layer, metal films selected from silver, nickel, chromium, iron, titanium, gold, aluminum, and alloys thereof are preferable, and thereamong, silver and aluminum are more preferable.

Concretely, as shown as an example in FIGs. 13A through 13C, in an in-mold mold 20 structured by a movable mold 21 and a fixed mold 22, a configuration (convex portions 25) for forming the light reflecting grooves on the peripheral side surface running along the axial direction of the translucent rod-shaped body, is provided at the movable mold 21. By joining the movable mold 21 with the fixed mold 22, a columnar cavity for the molding of the translucent rod-shaped body is formed at the interior. Note that 23 is a transfer film, 24 is a light reflecting film layer, and 26 is a gate for injection which opens to the cavity.

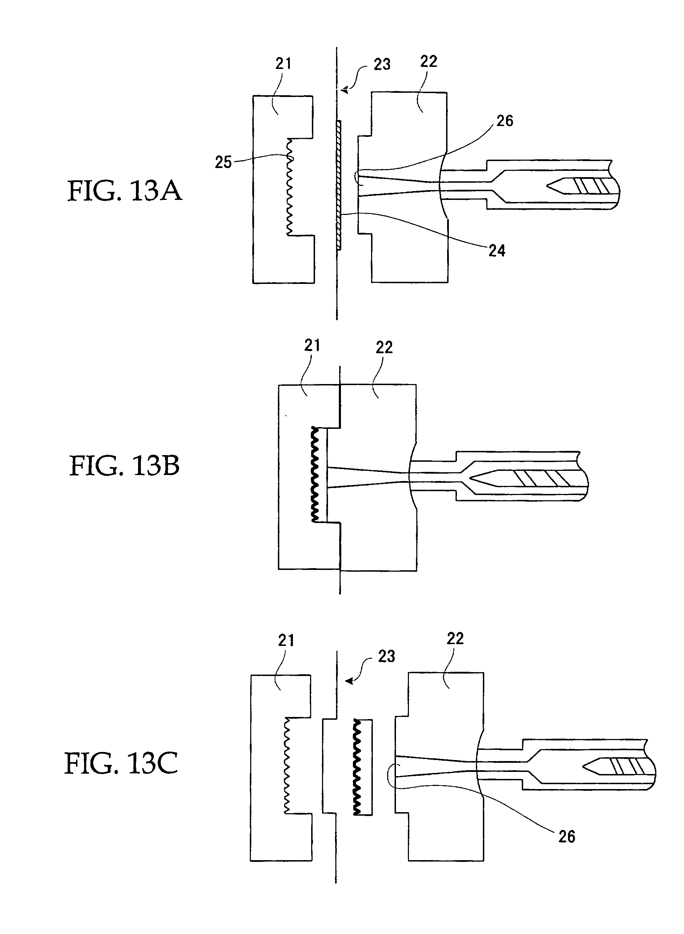

First, the transfer film 23 is positioned accurately by a transfer film feeding device which is not illustrated, and is inserted into the mold as shown in FIG. 13A. This transfer film 23 is deformed due to the mold being closed, and is covered by the convex portions 25 of the movable mold without any gap therebetween (see FIG.13B). Then, due to a resin material being injected from the gate 26 of the fixed mold, due to the heat and pressure, the translucent rod-shaped body is molded simultaneously with the transfer of the light reflecting film to the light reflecting grooves and the land portions (see FIG.13C). Then, by repeating the above-described processes, continuous mass production is carried out.

In accordance with this method, simultaneously with the injection molding of the translucent rod-shaped body, the light reflecting film can be formed on the light reflecting grooves with high transfer accuracy. Thus, a process for forming the light reflecting film can be eliminated, mass production is possible, and cost reduction is aimed for.

By changing the color of the LED used as the light source, the linear light emitter of the present invention can be made to emit various colors, and multicolorization is possible. For example, when LEDs of the three colors of RGB are used, it is possible to switch the color among the seven colors of red (R), green (G), blue (B), white (R+G+B), yellow (R+G), violet (R+B), and cobalt blue (G+B).

Further, in the linear light emitter of the present invention, as described above, the angle distribution of the exiting light in the peripheral direction is optimized, and light from the side peripheral surface can be radiated with high directivity and without loss. In addition, a linear light emitter having excellent stability, heat-resistance, weatherability, and cost performance can be realized. Therefore, the linear light emitter of the present invention can be broadly used as a substitute for neon tubes (e.g., game devices, pachinko, and the like), construction illumination parts (e.g., stairs, illumination for handrails, handrails for bathtubs, and the like), road materials (e.g., road signs, signboards, stop lines, road rivets, and the like), automobile parts (e.g., doors, steps, taillights, side mirrors, illumination inside and outside of the vehicle, and the like), toys and the like. Among these, the linear light emitter of the present invention is suitable for automobile parts.

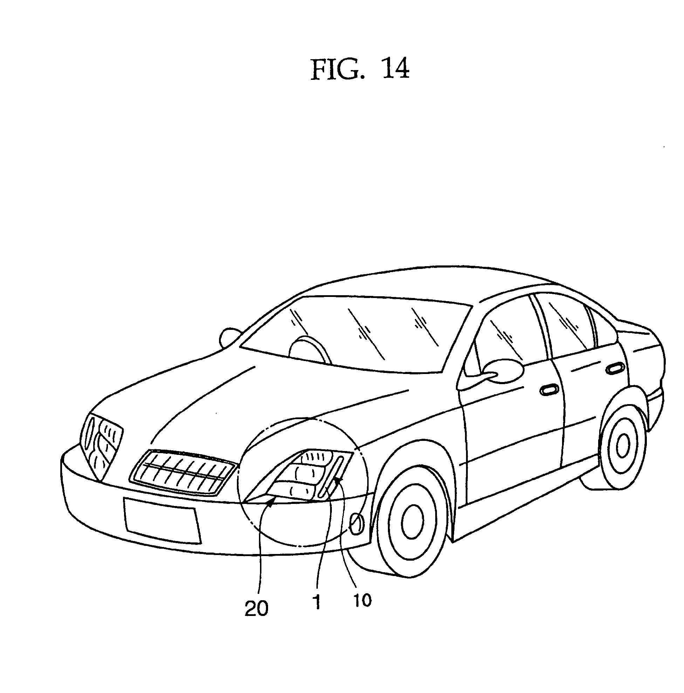

Examples of usage applied to automobile parts are shown, for example, in FIGS. 14 through 26 which will be described hereinafter.

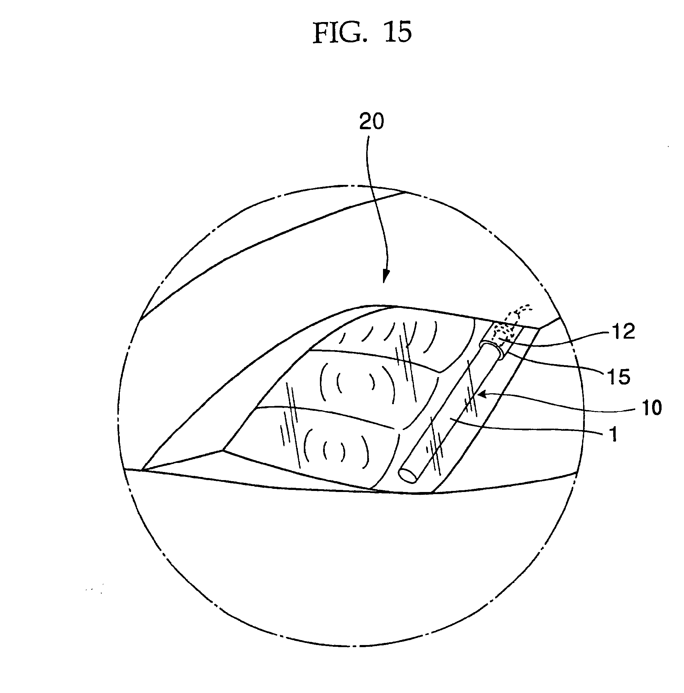

FIGs. 14 and 15 are a structure in which the linear light emitter 10, which includes the translucent rod-shaped body 1, is disposed at the side surface of a headlight 20 of an automobile. In accordance therewith, the linear light emitter 10 is capable of multicolor expression, and can also function as a winker by flashing on-and-off. Note that, in FIG. 15, 12 is the light source and 15 is the housing.

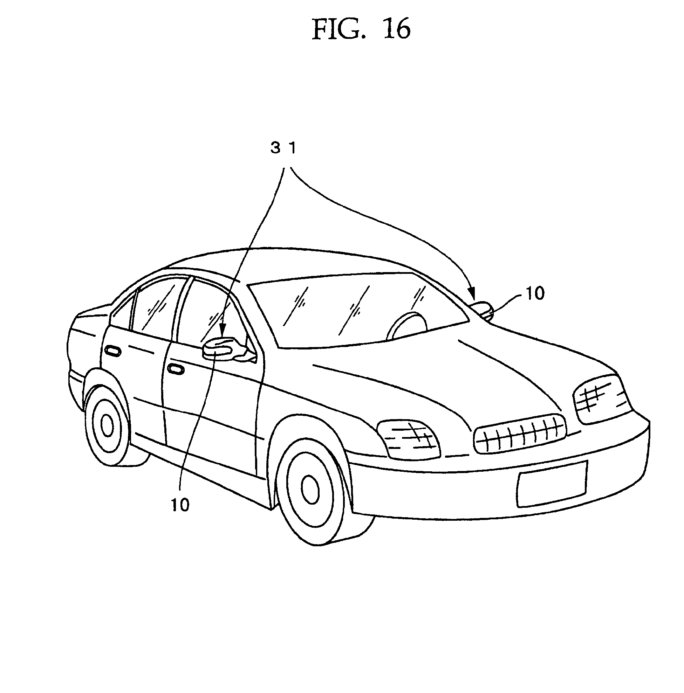

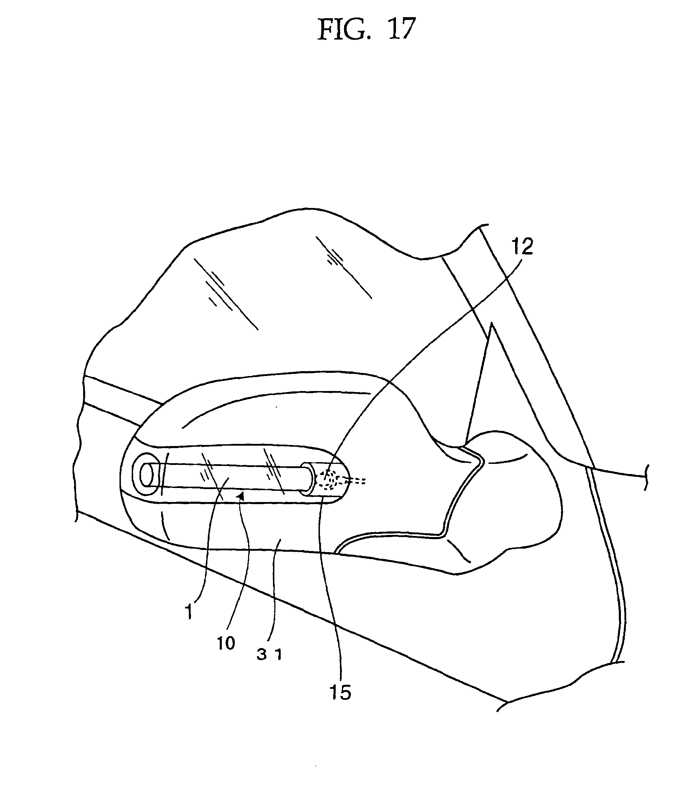

FIGS. 16 and 17 are a structure in which the linear light emitter 10, which includes the translucent rod-shaped body 1, is disposed at the reverse side of a retractable side mirror 31 of an automobile. In accordance therewith, the linear light emitter 10 is capable of multicolor expression, and can also function as a winker by flashing on-and-off. Note that, in FIG. 17,12 is the light source and 15 is the housing.

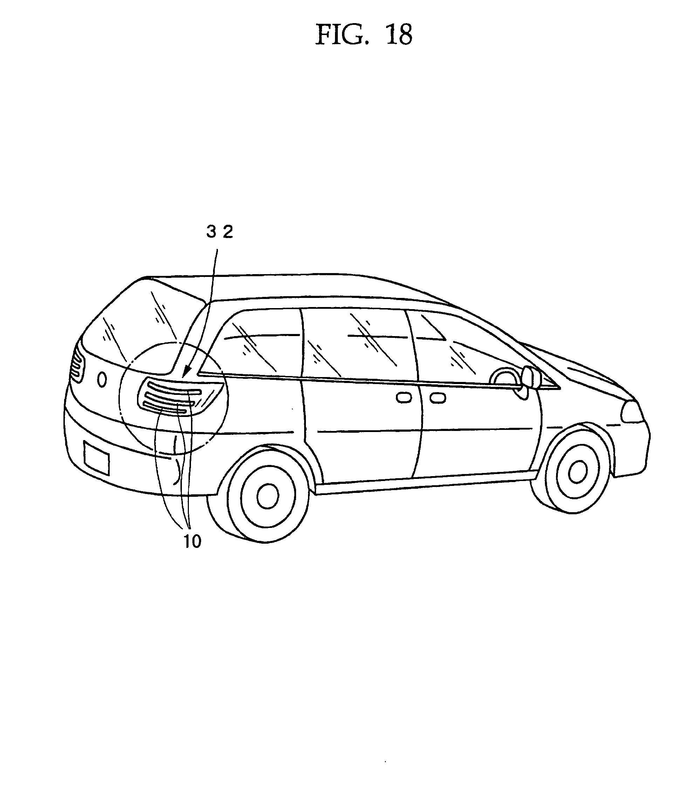

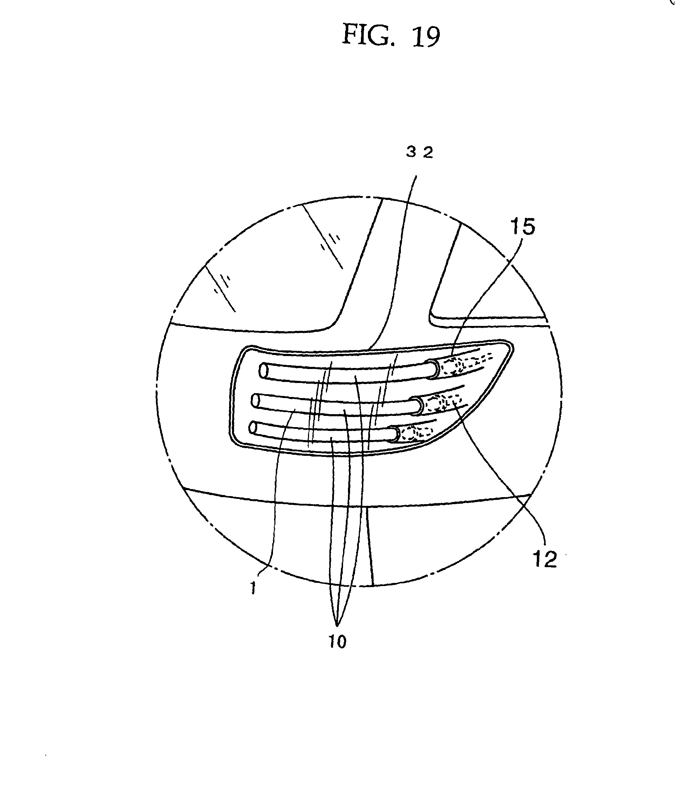

FIGs. 18 and 19 are a structure in which three of the linear light emitters 10, which include the translucent rod-shaped body 1, are disposed at a back light 32 of an automobile. Because the translucent rod-shaped body 1 can be bent freely, it can be smoothly mounted in accordance with the shape of the vehicle body. Note that, in FIG. 19,12 is the light source and 15 is the housing.

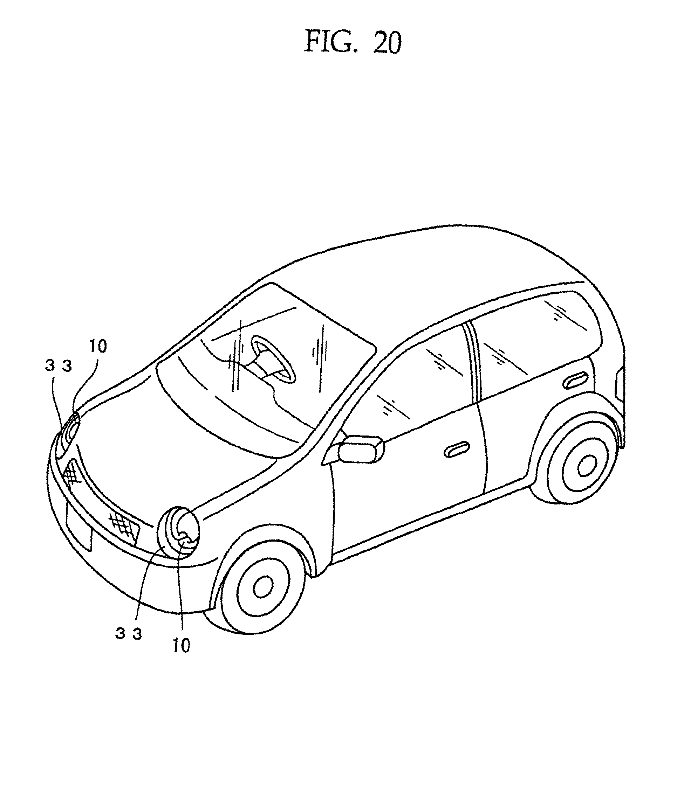

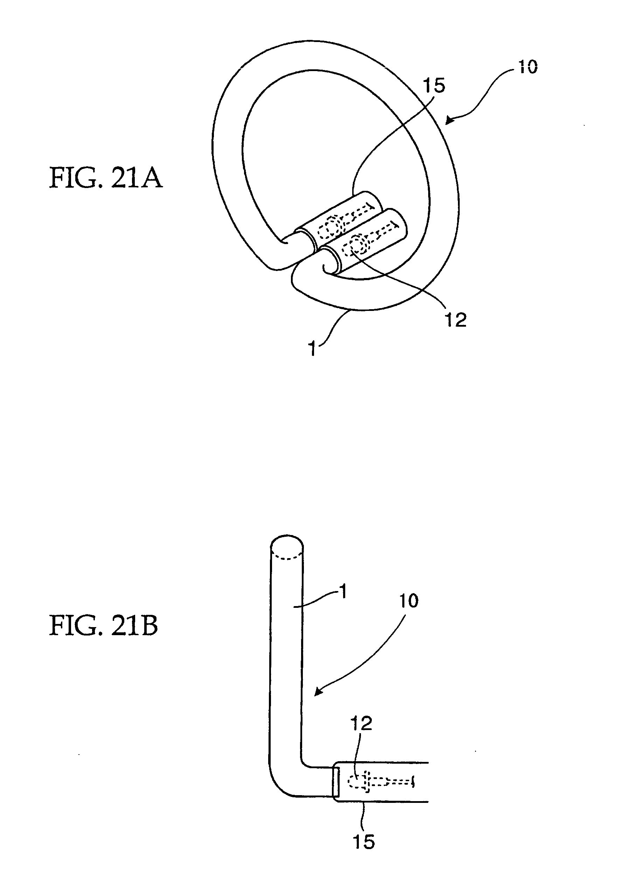

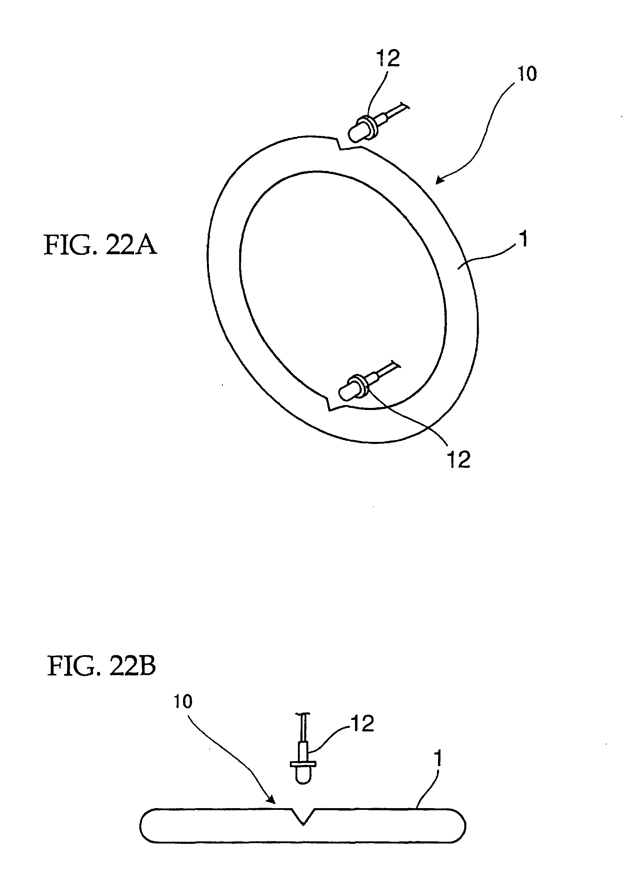

FIGs. 20 through 22 are structures in which the linear light emitter 10, which includes the translucent rod-shaped body 1 which is formed in a ring-shape, is disposed at a headlight 33 of an automobile. As shown in FIG. 21A and FIG. 21B, the sockets 15, which have the light sources 12 therein, are mounted to the both end portions of the ring-shaped translucent rod-shaped body 1. Further, as shown in FIGs. 22A and 22B, a cut portion is formed at two places in the radial direction of the ring-shaped translucent rod-shaped body 1, and the light sources 12 are disposed at the cut portions. Note that, in FIGS. 21 and 22,12 is the light source and 15 is the housing.

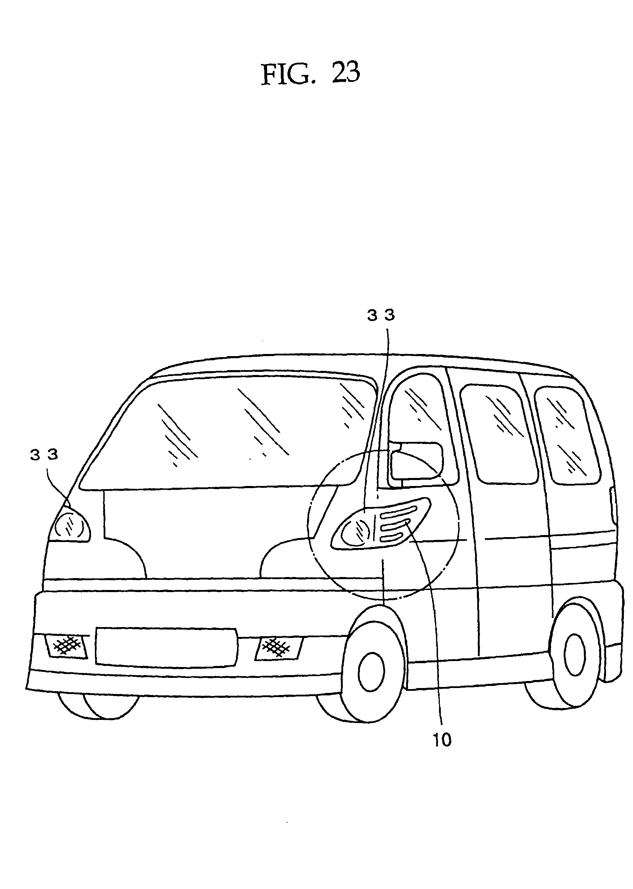

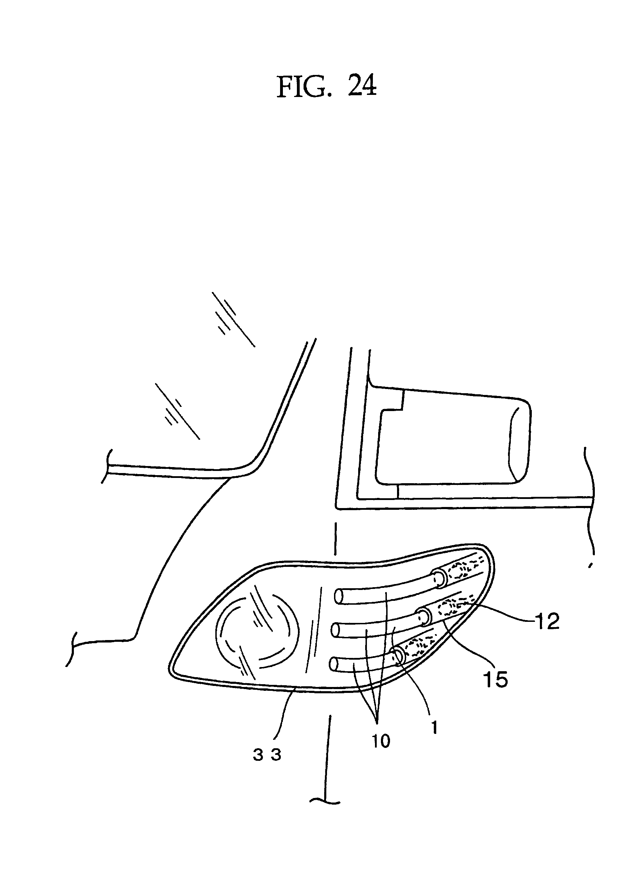

FIGS. 23 and 24 are a structure in which three of the linear light emitters 10, which include the translucent rod-shaped body 1, are disposed at a differently-shaped headlight 33 of a wagon-type vehicle. Because the translucent rod-shaped body 1 can be bent freely, it can be smoothly mounted in accordance with the shape of the vehicle body. Note that, in FIG. 24,12 is the light source and 15 is the housing.

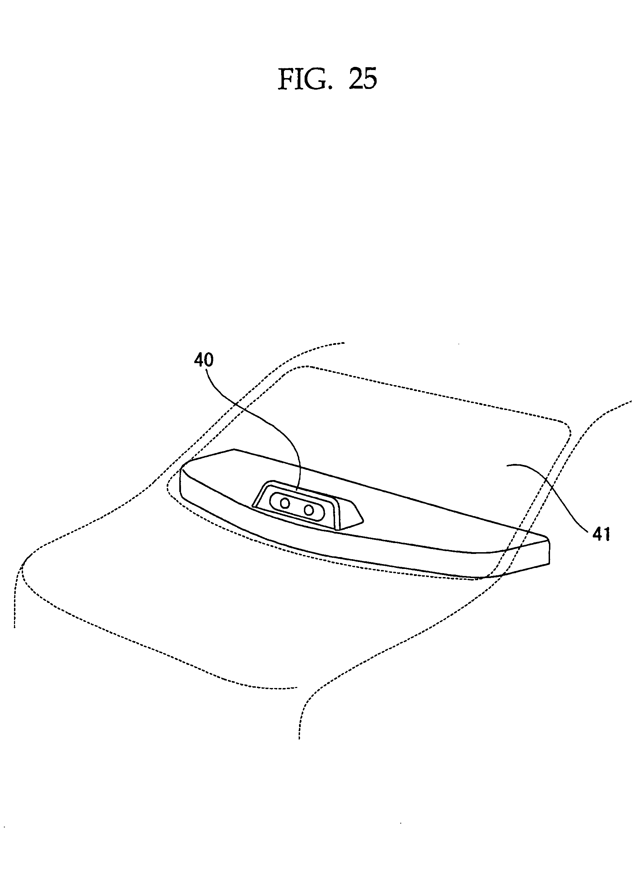

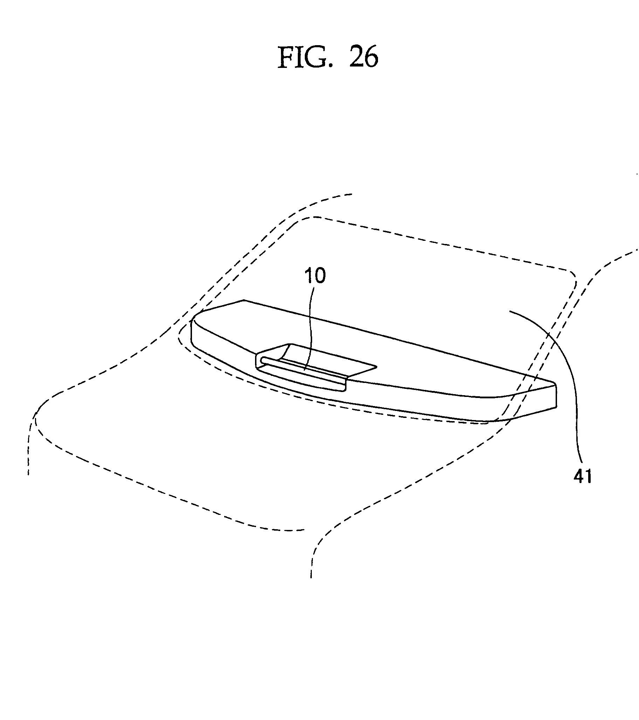

FIGS. 25 and 26 show a high-mount stop lamp mounted to the rear portion of a vehicle. FIG. 25 is a conventional lamp-type high-mount stop lamp 40. FIG. 26 is a perspective view showing a state in which the linear light emitter 10 is mounted as a high-mount stop lamp. Note that, in the figures, 41 is a window glass.

When the linear light emitter 10 shown in FIG. 26 is used in the high-mount stop lamp 40, as compared with the conventional stop lamp, the protruding portion disappears, and the linear light emitter 10 does not take up space and is superior from a design sense as well.

The linear light emitter of the present invention was described above. However, the present invention is not limited to the above-described aspects. For example, notches, grooves, rough surface portions or the like may be provided along the longitudinal direction of the outer peripheral surface of the translucent rod-shaped body, and a means for scattering the incident light may be used. In addition, various modifications may be made within a scope which does not depart from the gist of the present invention.

### Examples

Hereinafter, the present invention will be concretely described by showing Examples. However, the present invention is not to be limited by the following Examples.

### [Example 1]

Using a 200 type injection molding device, PMMA (polymethyl methacrylate) pellets were injection molded in a mold for a rod, which mold was φ 14 mm and a length of 20 cm, at a screw temperature of 220 °C to 240°C and a mold temperature of 60°C, and the translucent rod-shaped body was prepared.

Light reflecting films (white lines; SG100, an acrylic urethane coating material containing 33.3% by mass of TiO₂) of line widths of 1 mm, 3 mm, 5 mm, and 7 mm were respectively coated and formed in the lengthwise direction of the translucent rod-shaped body.

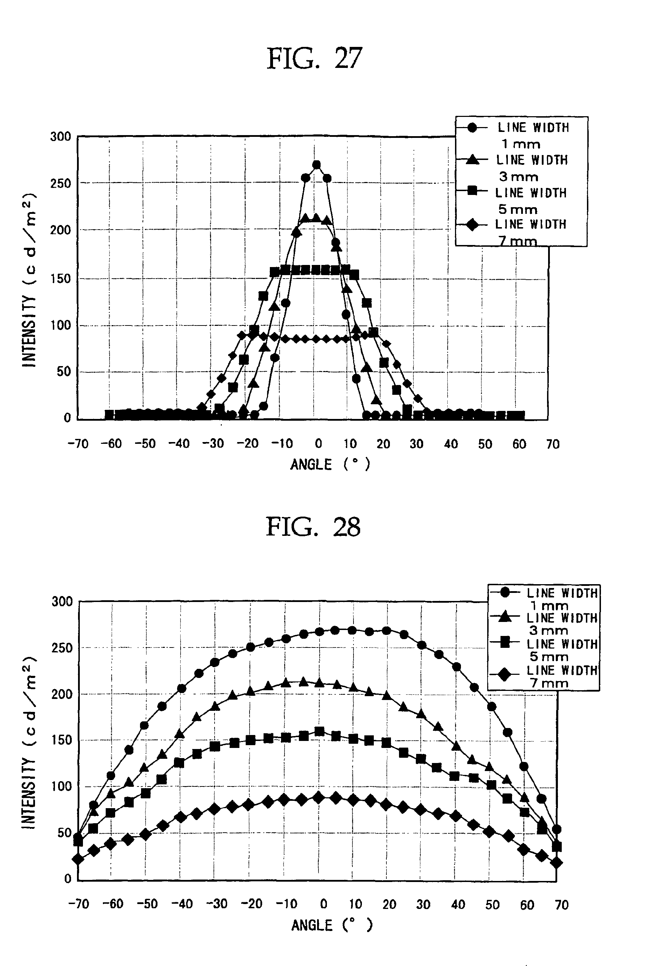

With regard to the obtained translucent rod-shaped body, two LEDs (red color, HPWT-DH00; 50 mA) were used as the light source, and light was incident from one side. With regard to the intensity visual field angle characteristic at a position 40 cm from the light source side, the peripheral direction intensity distribution and the lengthwise direction intensity distribution at the time when the visual field angle was changed to ±60° from the front surface (0°) of the light emitting surface, were measured by using the Minolta colorimetar CS100. The results are shown in Tables 1, 2 and FIGS. 27, 28.

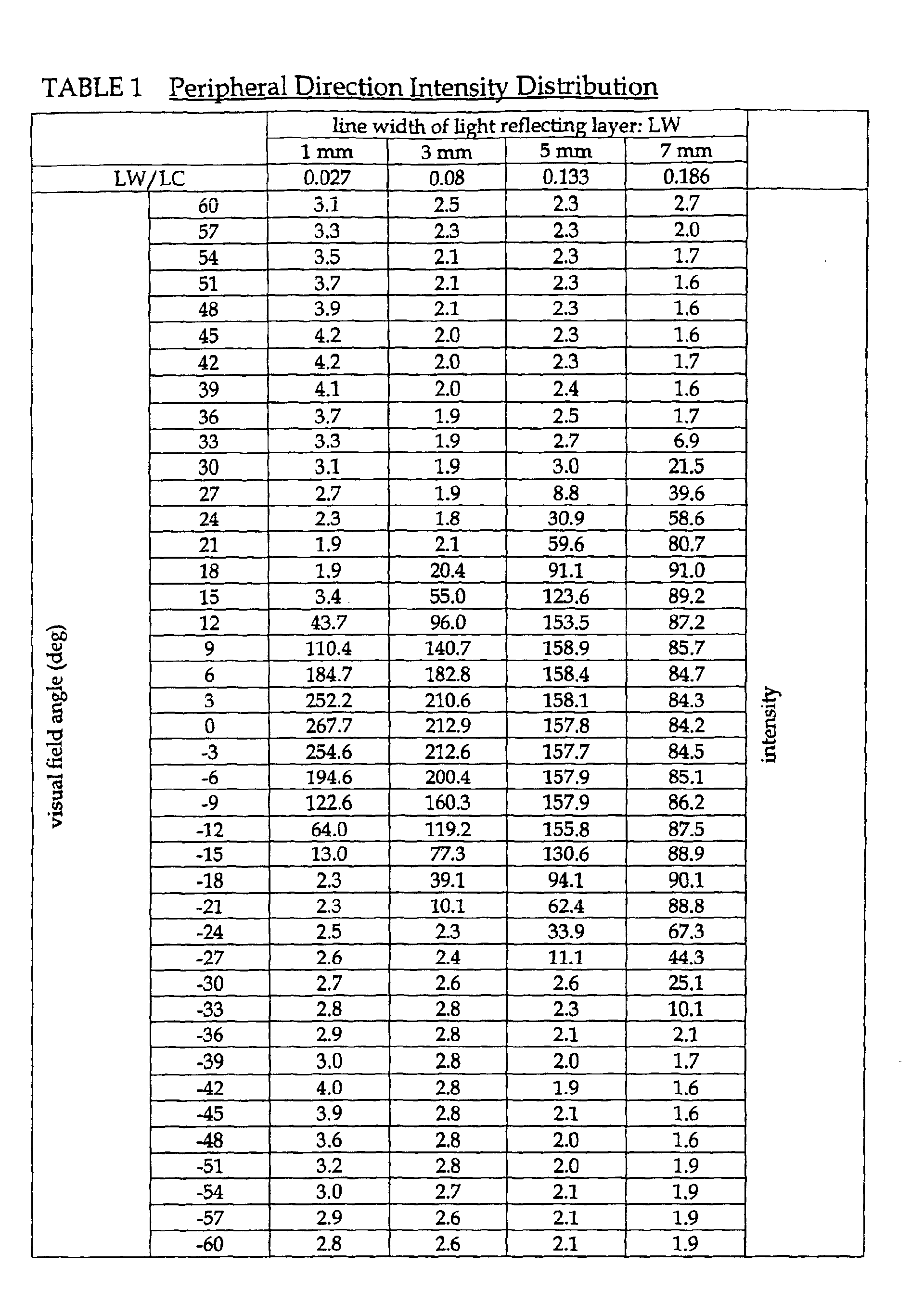

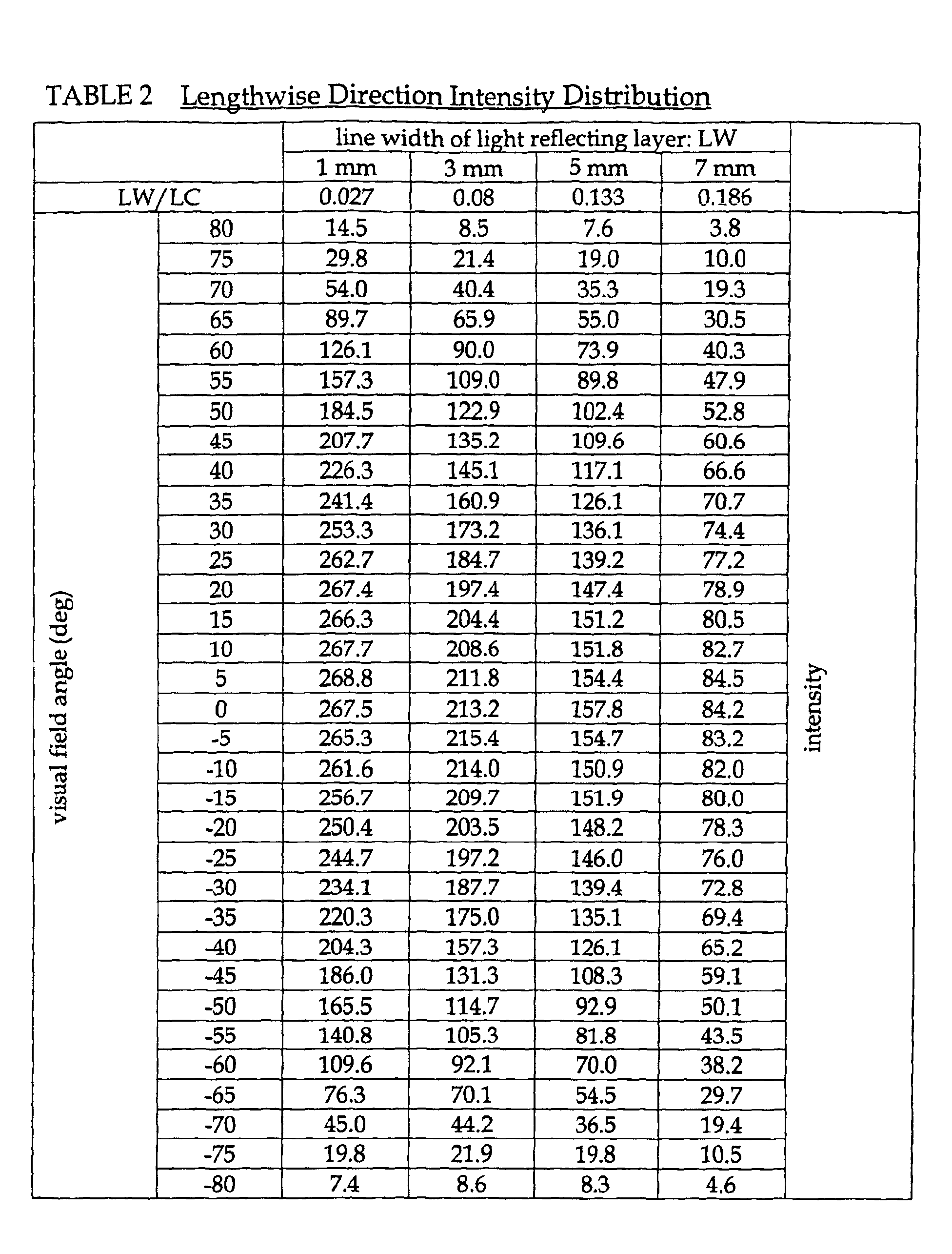

### [Example 2]

In the same way as in Example 1, translucent rod-shaped bodies having a diameter of 12 mm and lengths of 50 cm and 100 cm were prepared.

Light reflecting films (white lines; SG100, an acrylic urethane coating material containing 33.3% by mass of TiO₂) line widths of 1.2 mm, 3.5 mm, 6 mm and 8 mm were respectively coated and formed in the lengthwise direction of the translucent rod-shaped body.

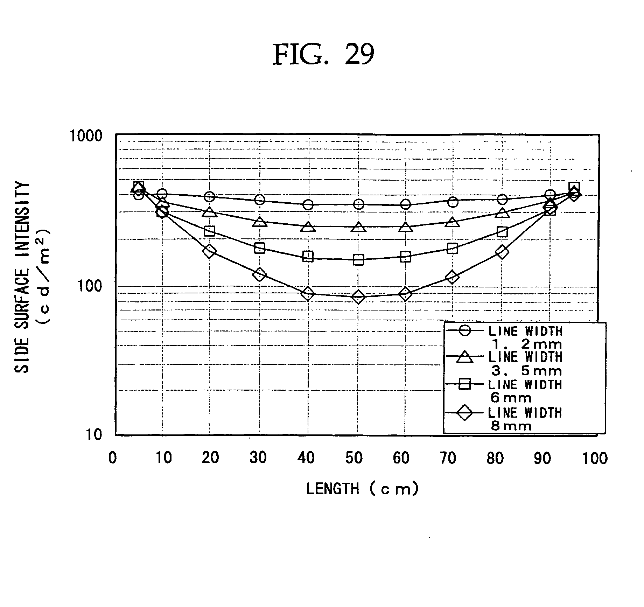

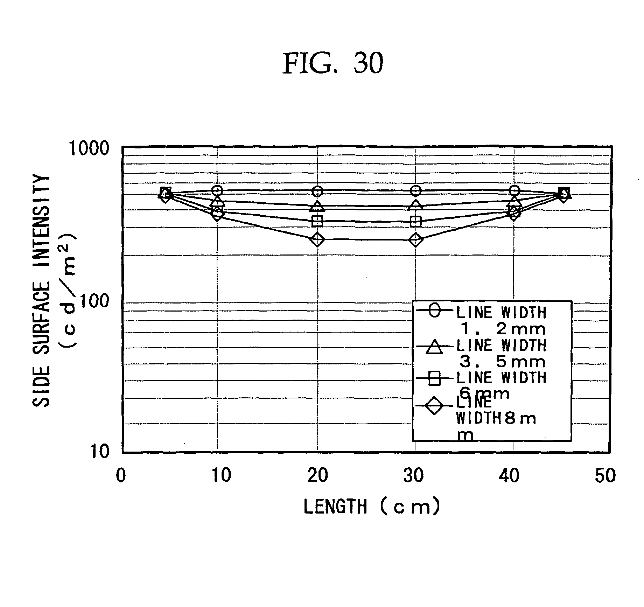

With regard to the obtained translucent rod-shaped body, for the relationship between the axial direction length and the side surface intensity (cd/m²), two LEDs each (red color, HPWT-DH00) were used as the light sources (for a total of 4), and light was incident from both sides, and the intensity (cd/m²) of the light emitting surface at a visual field angle (θ) of 0° was measured by using the Minolta colorimetar CS100. The results are shown in Table 3 (100 cm length), Table 4 (50 cm length) and FIGS. 29, 30.

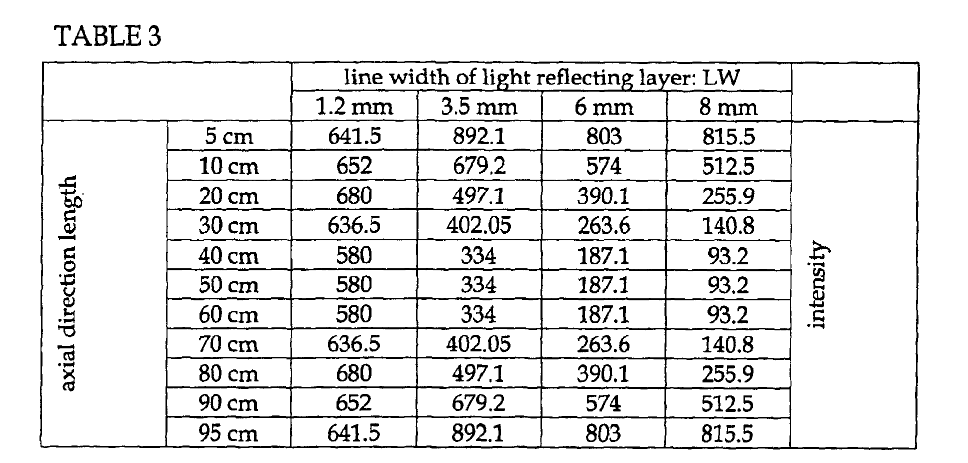

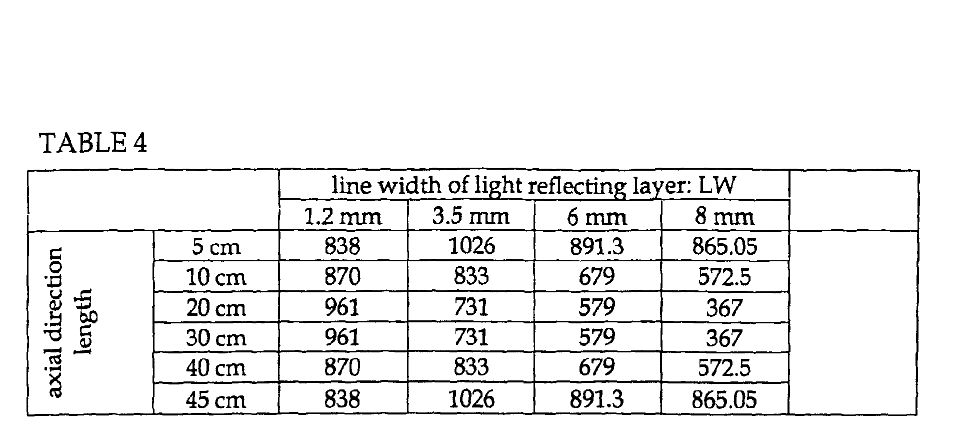

### [Example 3 and Comparative Examples 1, 2]

Using a 200 t type injection molding device, PMMA (polymethyl methacrylate) pellets were injection molded in a mold for a rod, which mold was φ14 mm and a length of 20 cm and had convex portions for formation of the light reflecting layer along the lengthwise direction at one portion of the inner surface thereof, at a screw temperature of 220°C to 240°C and a mold temperature of 60°C, and the translucent rod-shaped body was prepared.

57 V-shaped grooves, whose groove widths are 5 mm, groove depths are 0.5 mm and groove intervals are 3.5 mm, are formed uniformly in the axial direction in the outer peripheral surface of the obtained translucent rod-shaped body. Note that the groove angle is expressed by the vertical angle, and 1/2 of the vertical angle is the angle θ (°) formed by the axis orthogonal to the axial direction of the linear light emitter and the light incident surface at the light reflecting groove.

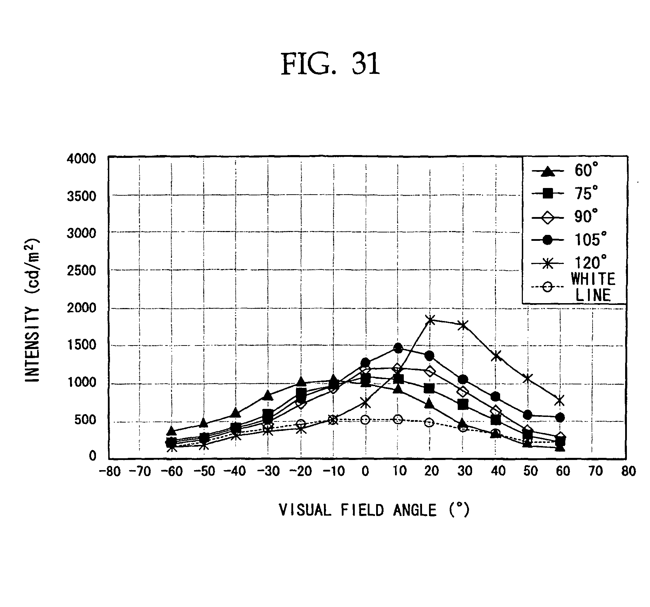

With regard to the obtained translucent rod-shaped body, 4 LEDs (red color, HPWT-DH00) were used as the light source, and light was incident from one side. For the intensity visual field angle characteristic in accordance with changes in the groove angle at the 29^{th} groove position (10 cm from the light source side), the intensity (cd/m²) of the light emitting surface at the time when the visual field angle was changed to ±60° from the front surface (0°) of the light emitting surface was measured by using the Minolta colorimetar CS100. The results are shown in Table 5 and FIG. 31.

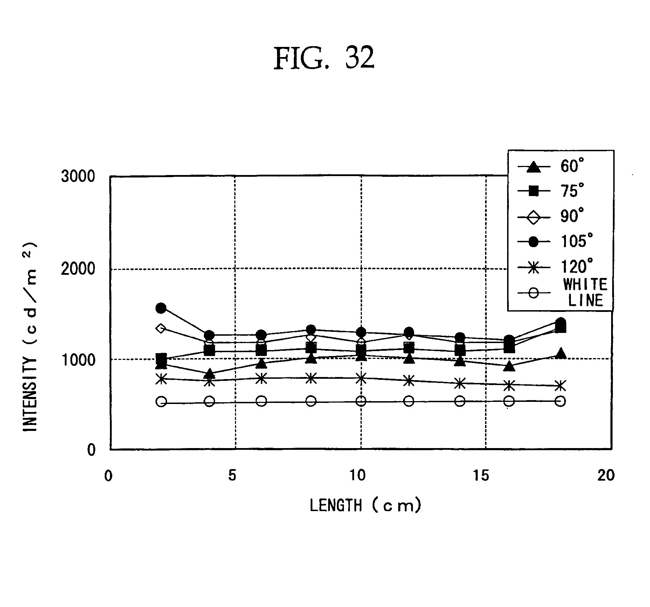

Further, with regard to the intensity distribution (side surface intensity) in the axial direction (lengthwise direction), four LEDs (red color, HPWT-DH00) were used as the light sources, and light was incident from the both ends. The intensity (cd/m²) of the light emitting surface at a visual field angle of 0° was measured by using the Minolta colorimetar CS100. The results are shown in Table 6 and FIG. 32.

Note that measurement was conducted similarly on, as Comparative Example 1, a structure in which grooves and white lines (a reflection preventing layer; SG100, an acrylic urethane coating material containing 33.3% by mass of TiO₂) were not provided, and, as Comparative Example 2, a structure in which grooves were not provided and white lines (a reflection preventing layer) were provided.

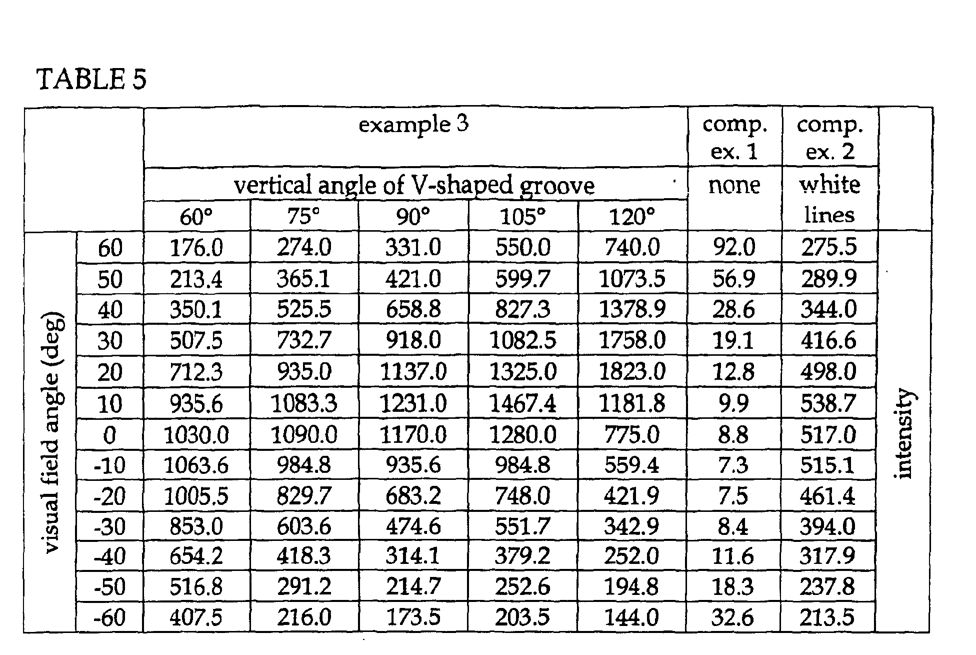

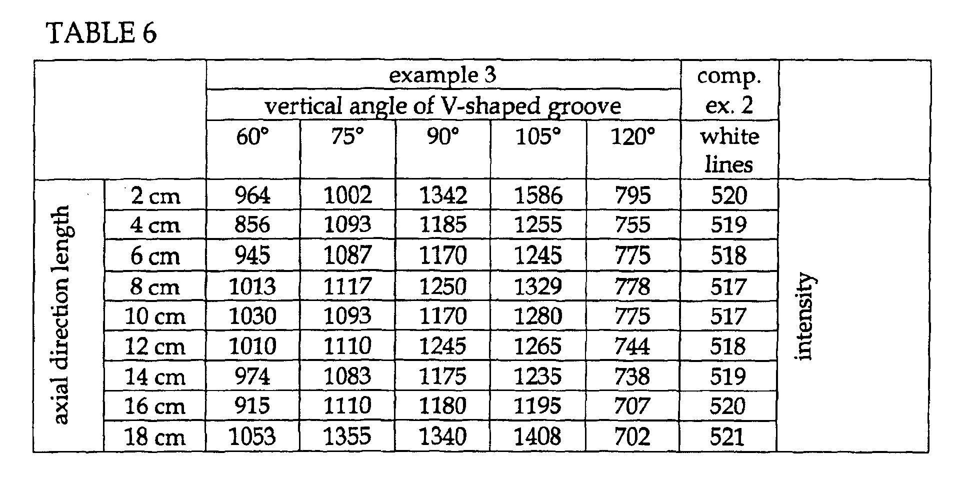

### [Example 4 and Comparative Examples 3,4]

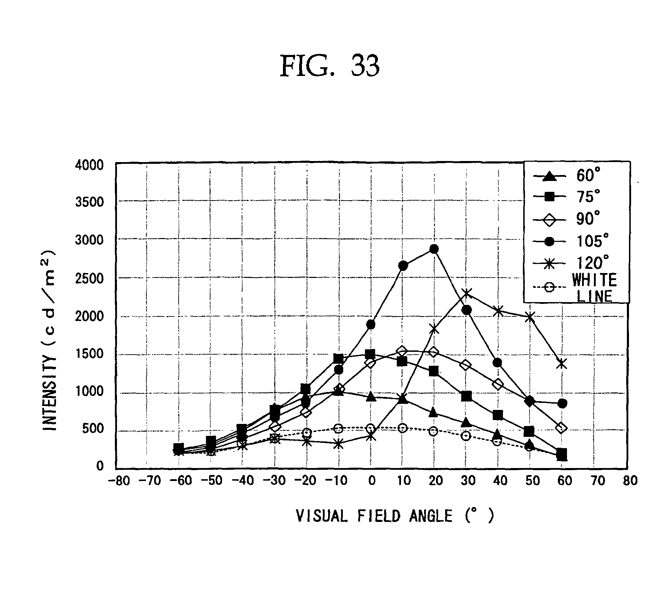

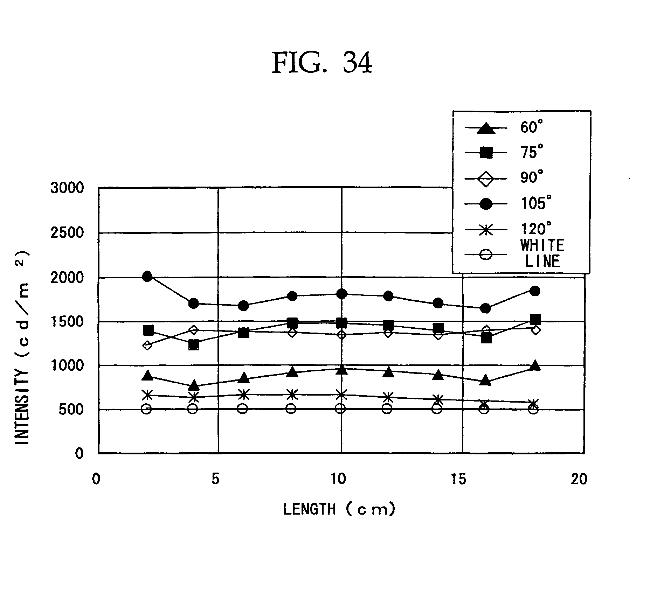

Except that inverted cone-shaped grooves were used as the light reflecting grooves instead of the V-shaped grooves, the same procedures as in Example 3 were carried out, and the intensity visual field angle characteristic in accordance with changes in the groove angle, and the side surface intensity were measured. The results are shown in Tables 7, 8 and FIGs. 33, 34.

The inverted cone-shaped grooves have a groove width of 3.0 to 4.0 mm, a groove depth of 0.5 mm, and a groove interval of 3.5 mm. Note that the groove angle is expressed by the vertical angle, and 1/2 of the vertical angle is the angle θ (°) formed by the axis orthogonal to the axial direction of the linear light emitter and the light incident surface at the light reflecting groove.

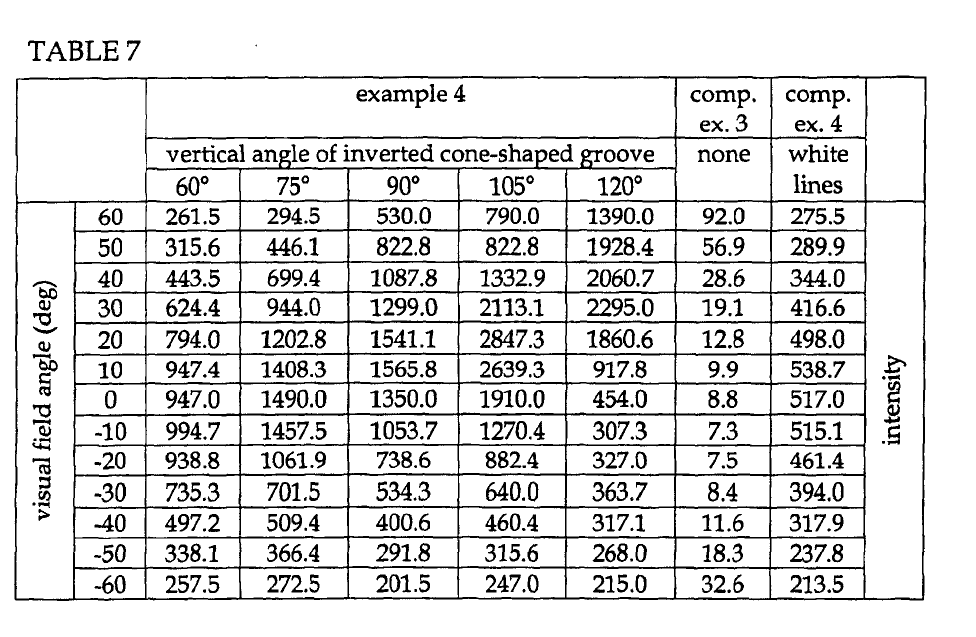

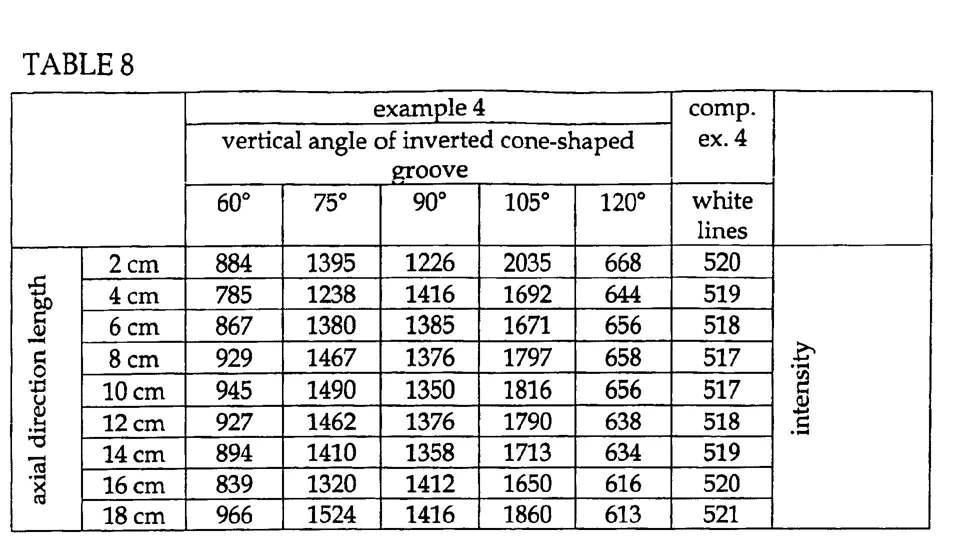

### [Example 5 and Comparative Examples 5, 6]

Using a 200 t type injection molding device, PMMA (polymethyl methacrylate) pellets were injection molded in a mold for a rod, which mold was φ 14 mm and a length of 20 cm and had convex portions for formation of the light reflecting layer along the lengthwise direction at one portion of the inner surface thereof, at a screw temperature of 220°C to 240°C and a mold temperature of 60°C, and the translucent rod-shaped body was prepared.

57 V-shaped grooves, whose groove widths are 5 mm, groove depths are 0.5 mm, and groove intervals are 3.5 mm and whose both ends are stopped as shown in FIGS. 5A and 5B, are formed uniformly in the axial direction in the outer peripheral surface of the obtained translucent rod-shaped body. Note that the groove angle is expressed by the vertical angle, and 1/2 of the vertical angle is the angle θ (°) formed by the axis orthogonal to the axial direction of the linear light emitter and the light reflecting surface at the light reflecting groove.

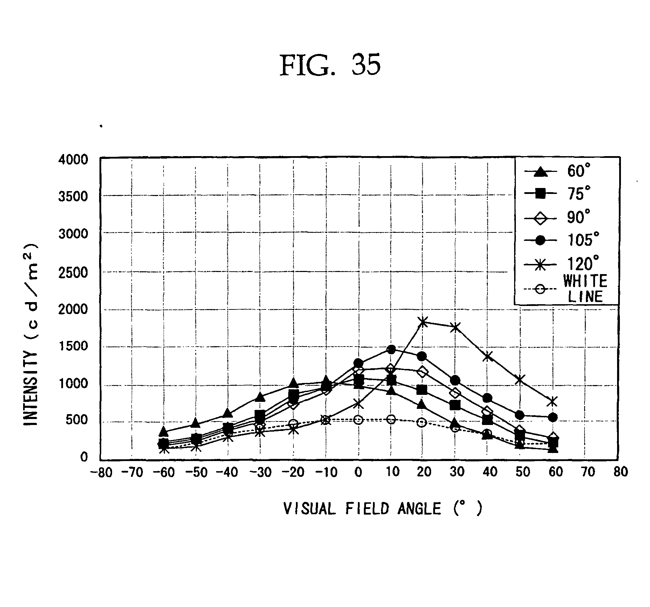

With regard to the obtained translucent rod-shaped body, 4 LEDs (red color, HPWT-DH00) were used as the light source, and light was incident from one side. For the intensity visual field angle characteristic in accordance with changes in the groove angle at the 29^{th} groove position (10 cm from the light source side), the intensity (cd/m²) of the light emitting surface at the time when the visual field angle was changed to ±60° from the front surface (0°) of the light emitting surface was measured by using the Minolta colorimetar CS100. The results are shown in Table 9 and FIG. 35.

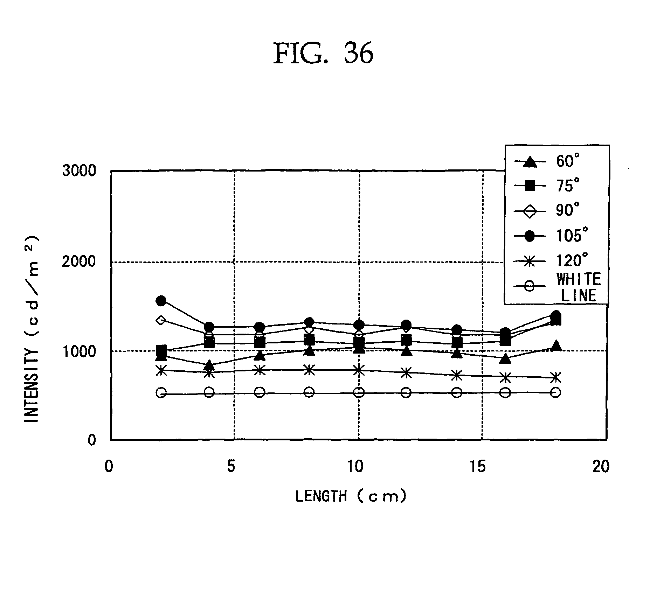

Further, with regard to the intensity distribution (side surface intensity) in the axial direction (lengthwise direction), four LEDs (red color, HPWT-DH00) were used as the light sources, and light was incident from the both ends. The intensity of the light emitting surface at a visual field angle of 0° was measured by using the Minolta colorimetar CS100. The results are shown in Table 10 and FIG. 36.

Note that measurement was conducted similarly on, as Comparative Example 5, a structure in which grooves and white lines (reflective coating material; SG100, an acrylic urethane coating material containing 33.3 % by mass of TiO₂) were not provided, and, as Comparative Example 6, a structure in which grooves were not provided and white lines (a reflection preventing layer) were provided.

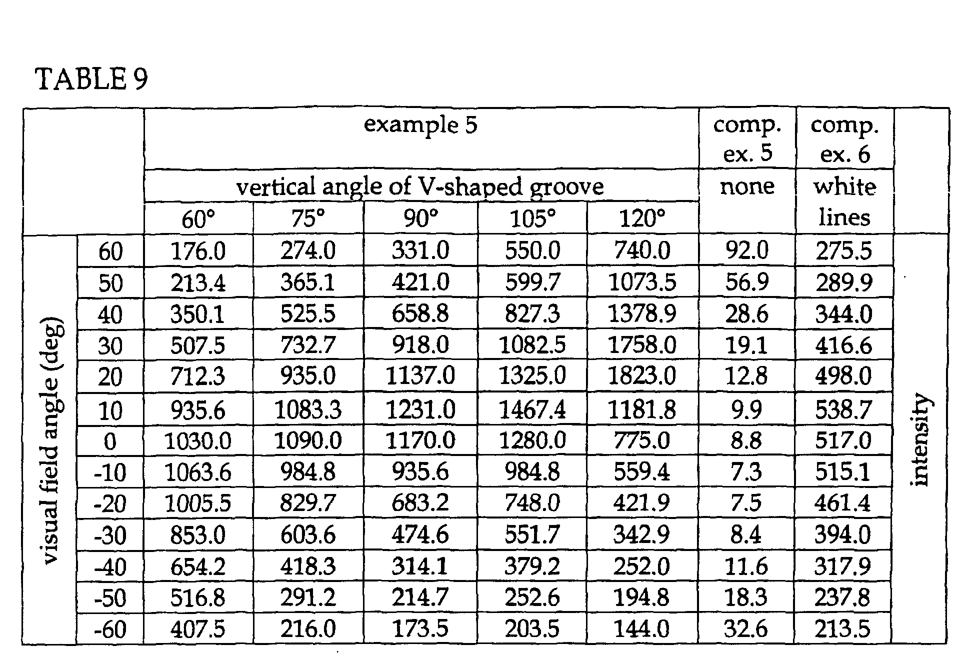

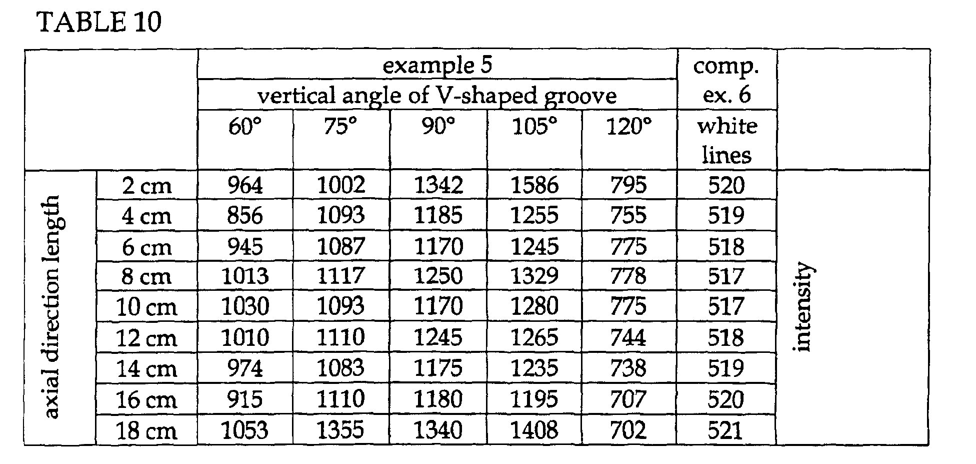

### [Example 6 and Comparative Examples 7,8]

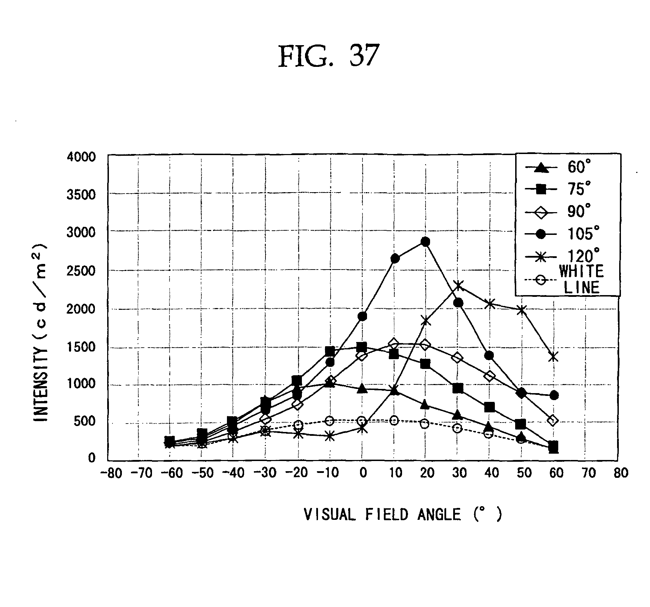

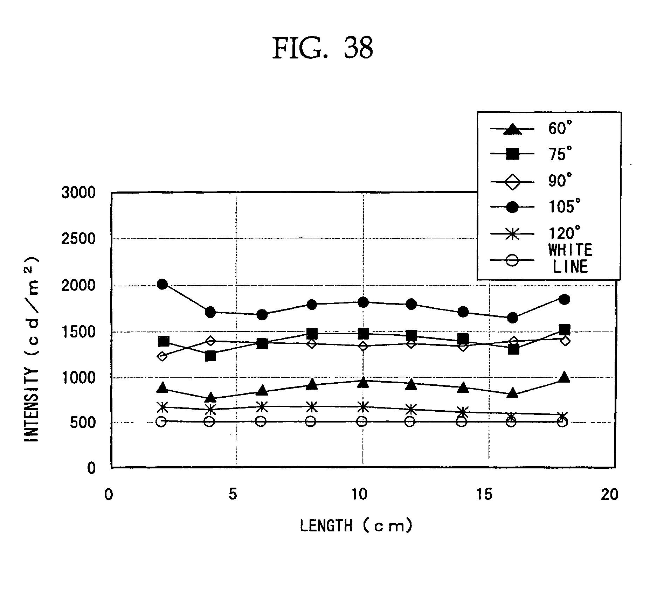

Except that inverted cone-shaped grooves were used as the light reflecting grooves instead of the V-shaped grooves, the same procedures as in Example 5 were carried out, and the intensity visual field angle characteristic in accordance with changes in the groove angle, and the side surface intensity were measured. The results are shown in Tables 11, 12 and FIGs. 37,38.

Both ends of the inverted cone-shaped grooves are stopped as shown in FIGS. 6A and 6B, and the inverted cone-shaped grooves have a groove width of 3.0 mm to 4.0 mm, a groove depth of 0.5 mm, and a groove interval of 3.5 mm. Note that the groove angle is expressed by the vertical angle, and 1/2 of the vertical angle is the angle θ (°) formed by the axis orthogonal to the axial direction of the linear light emitter and the light reflecting surface at the light reflecting groove.

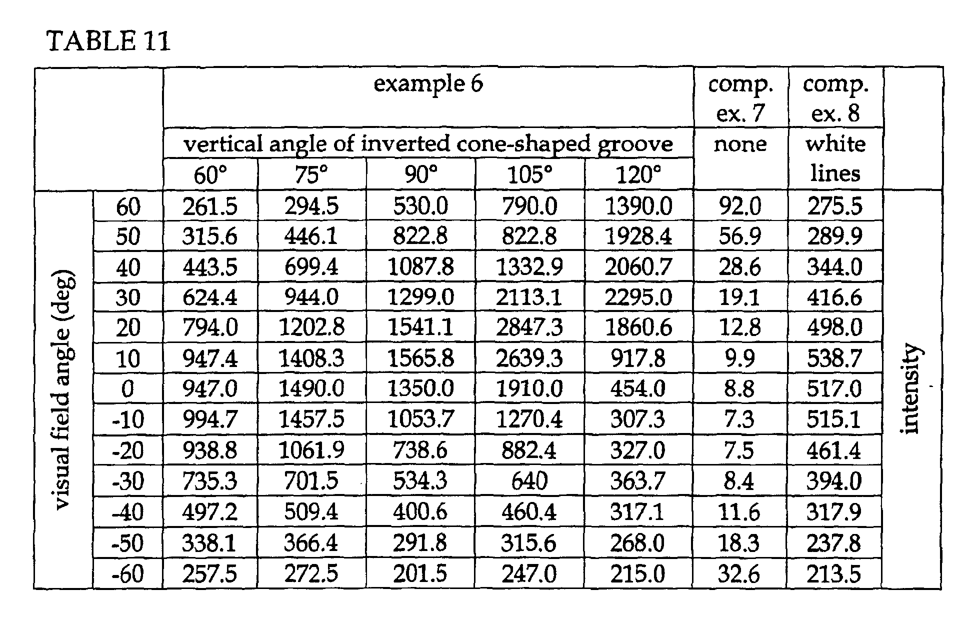

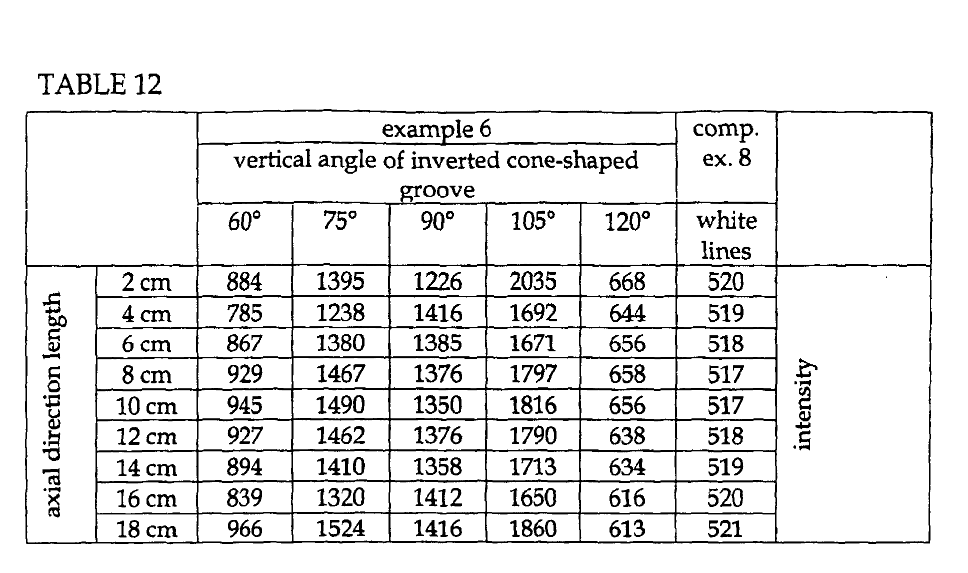

### [Example 7 and Comparative Example 9]

Using a 200 type injection molding device, PMMA (polymethyl methacrylate) pellets were injection molded in a mold for a rod, which mold was φ 14 mm and a length of 20 cm and had convex portions for formation of the light reflecting layer along the lengthwise direction at one portion of the inner surface thereof, at a screw temperature of 220°C to 240°C and a mold temperature of 60°C, and the translucent rod-shaped body was prepared.

57 V-shaped grooves, whose groove widths are 5 mm, groove depths are 0.5 mm, and groove intervals are 3.5 mm, are formed uniformly in the axial direction in the outer peripheral surface of the obtained translucent rod-shaped body.

Structures (Example 7) whose V-shaped grooves were polished to be surface roughnesses (Ra) of 0.4 µm, 0.2 µm, and unpolished structures (surface roughness (Ra): 2 µm) (Comparative Example 9) were obtained. Note that the measurement of the surface roughness was carried out by a laser interference microscope (manufactured by Keyence Corporation).

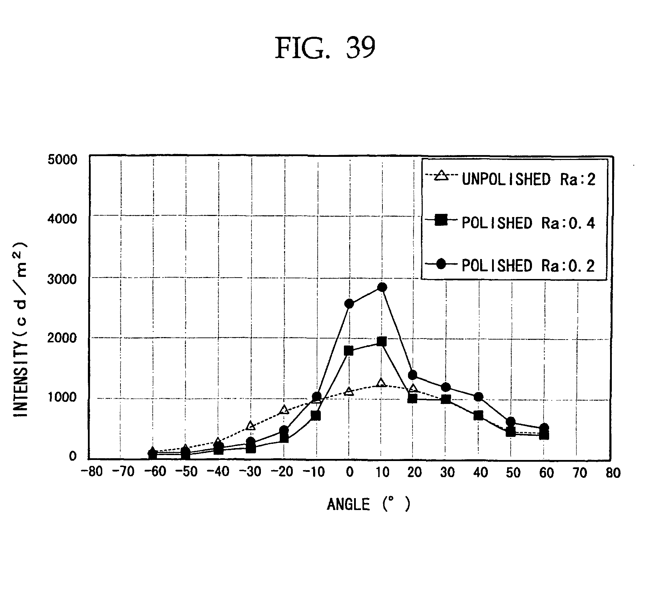

With regard to the obtained translucent rod-shaped body, 4 LEDs (red color, HPWT-DH00) were used as the light source, and light was incident from one side. For the intensity visual field angle characteristic of the 29^{th} groove position (10 cm from the light source side), the intensity (cd/m²) of the light emitting surface at the time when the visual field angle was changed to ±60° from the front surface (0°) of the light emitting surface was measured by using the Minolta colorimetar CS100. The results are shown in Table 13 and FIG. 39.

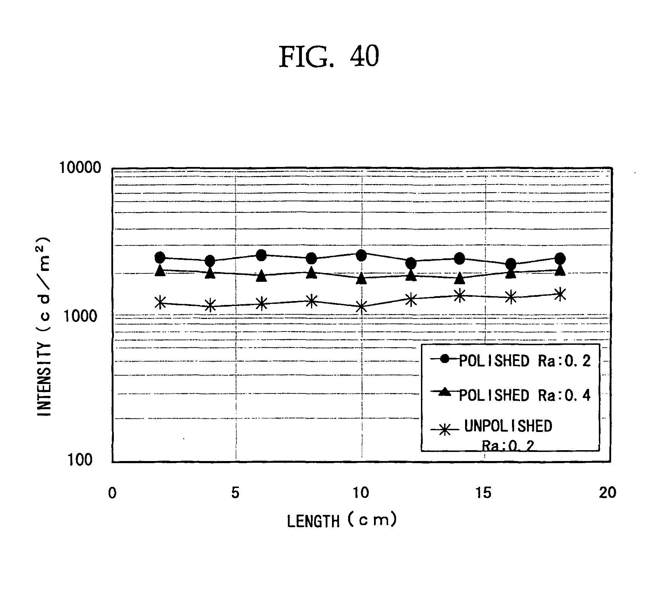

Further, with regard to the intensity distribution (side surface intensity) in the axial direction (lengthwise direction), four LEDs (red color, HPWT-DH00) were used as the light sources, and light was incident from the both ends. The intensity of the light emitting surface at a visual field angle of 0° was measured by using the Minolta colorimetar CS100. The results are shown in Table 14 and FIG. 40.

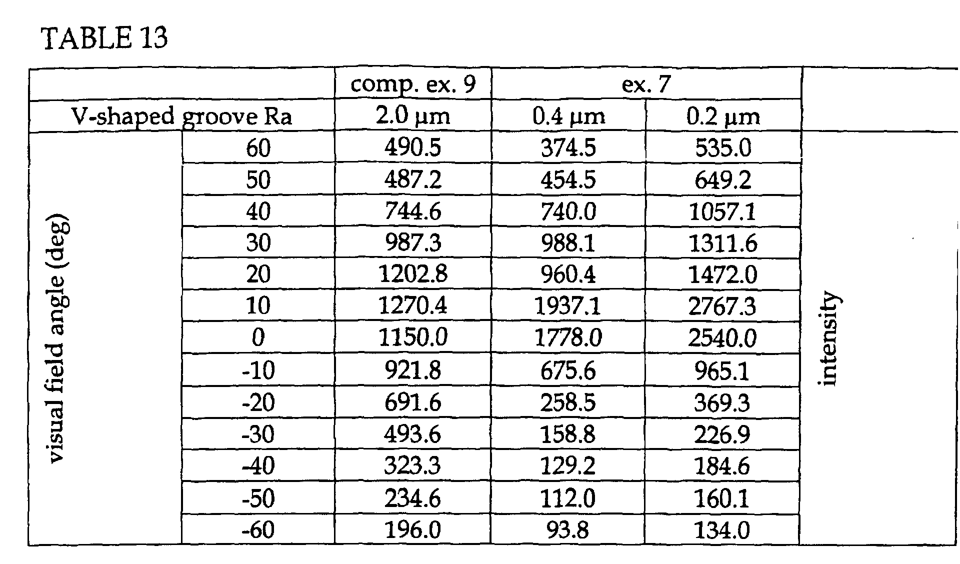

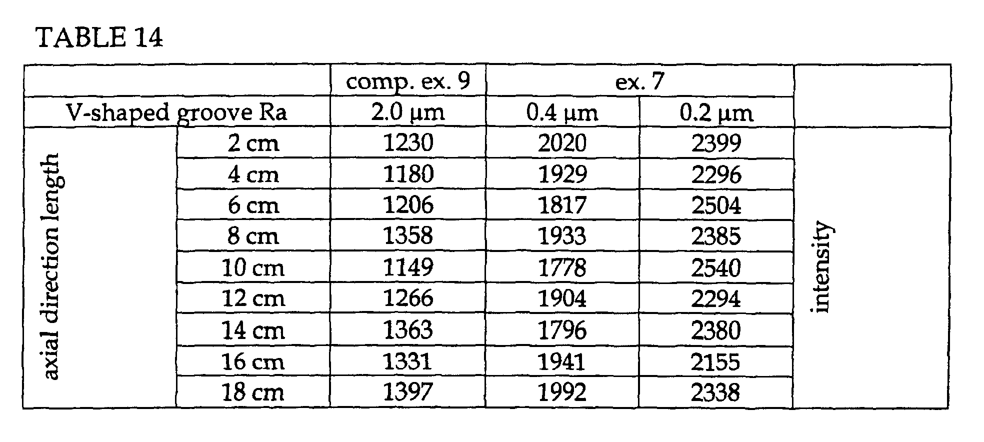

### [Example 8 and Comparative Example 10]

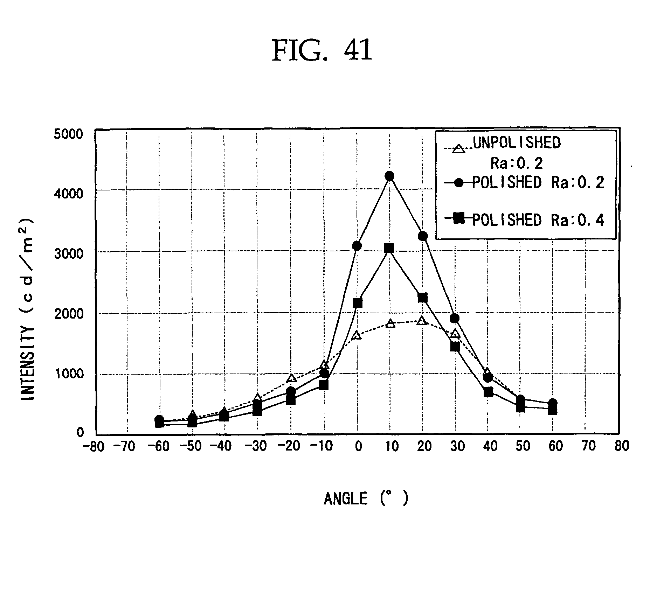

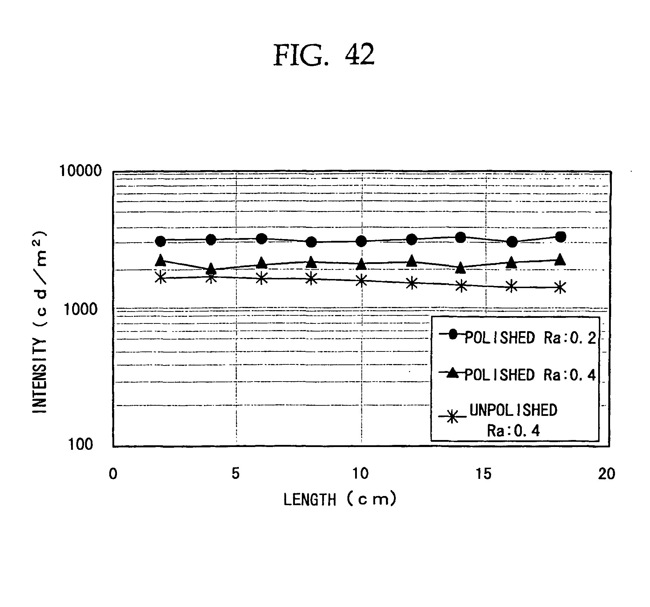

Except that inverted cone-shaped grooves were used as the light reflecting grooves instead of the V-shaped grooves, the same procedures as in Example 7 were carried out, and the intensity visual field angle characteristic and the side surface intensity were measured. The results are shown in Tables 15,16 and FIGS. 41, 42.

The inverted cone-shaped grooves have a groove width of 3.0 to 4.0 mm, a groove depth of 0.5 mm, and a groove interval of 3.5 mm. Structures (Example 8) whose inverted cone-shaped grooves were polished to be surface roughnesses (Ra) of 0.4 µm, 0.2 µm, and unpolished structures (surface roughness (Ra): 2 µm) (Comparative Example 10) were obtained.

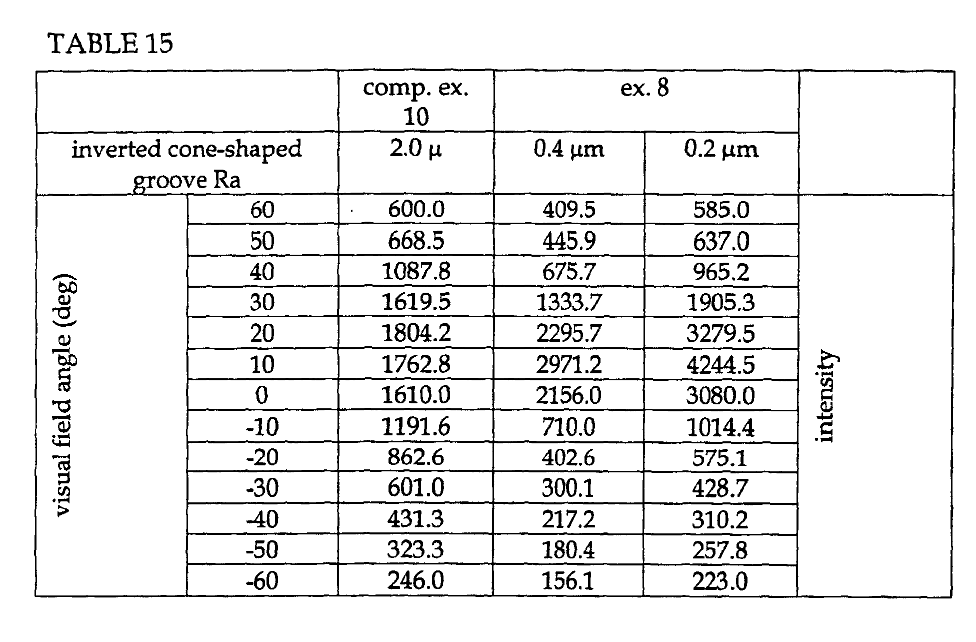

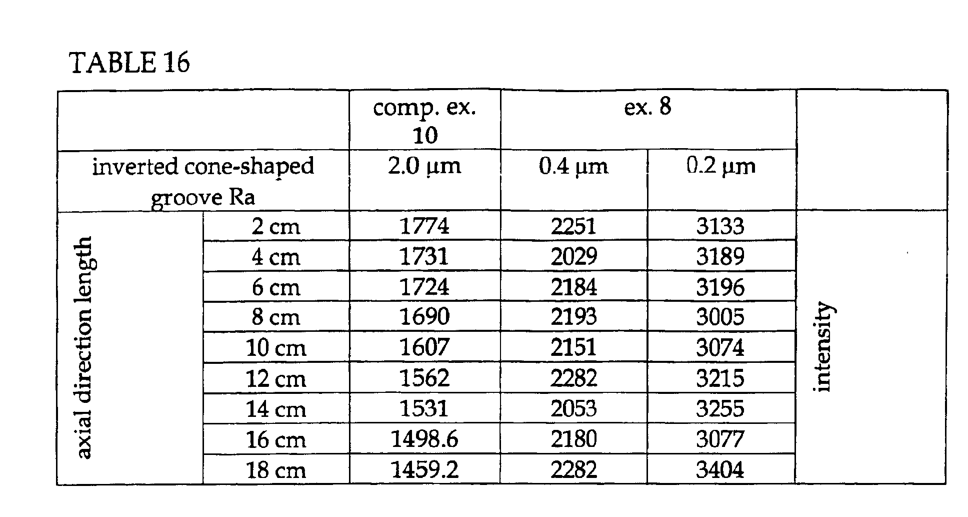

### [Example 9 and Comparative Example 11]

Using a 200 type injection molding device, PMMA (polymethyl methacrylate) pellets were injection molded in a mold for a rod, which mold was φ 14 mm and a length of 20 cm and had convex portions for formation of the light reflecting layer along the lengthwise direction at one portion of the inner surface thereof, at a screw temperature of 220°C to 240°C and a mold temperature of 60°C, and the translucent rod-shaped body was prepared.

57 V-shaped grooves, whose groove widths are 5 mm, groove depths are 0.5 mm, and groove intervals are 3.5 mm, are formed uniformly in the axial direction in the outer peripheral surface of the obtained translucent rod-shaped body.

The light reflecting surfaces of the V-shaped grooves were polished to a surface roughness (Ra) of 0.2 µm, and structures (Example 9) in which Ag or Al was deposited on the light reflecting surfaces after this polishing, and structures (Comparative Example 11) in which no metal film was formed on the light reflecting surfaces after this polishing were obtained. Note that the measurement of the surface roughness was carried out by a laser interference microscope (manufactured by Keyence Corporation).

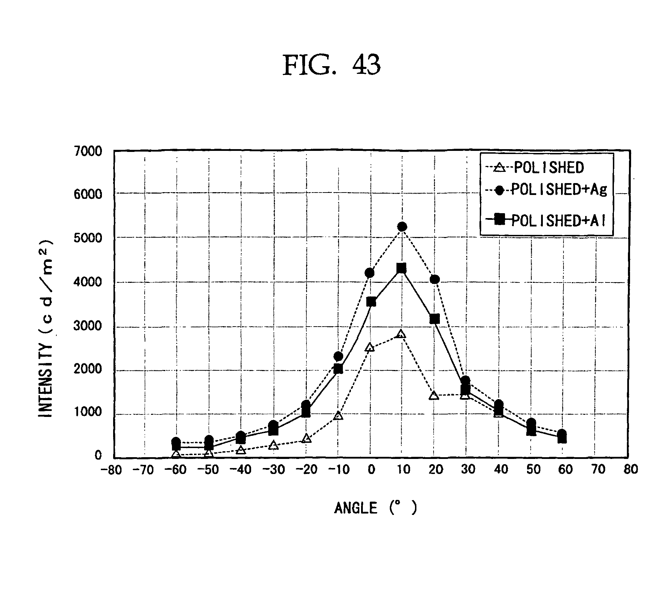

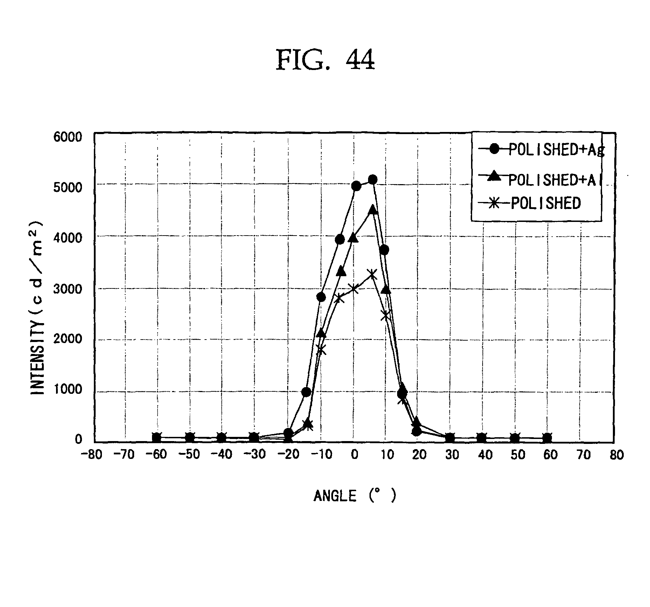

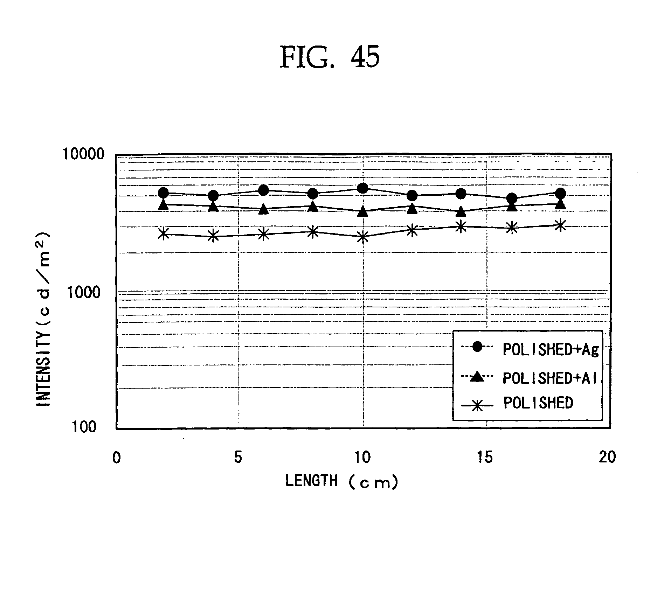

With regard to the obtained translucent rod-shaped body, 4 LEDs (red color, HPWT-DH00) were used as the light source, and light was incident from one side. For the intensity visual field angle characteristic of the 29^{th} groove position (10 cm from the light source side), the intensity distribution of the lengthwise direction and the intensity distribution of the peripheral direction at the time when the visual field angle was changed to ±60° from the front surface (0°) of the light emitting surface, were measured by using the Minolta colorimetar CS100. The results are shown in Tables 17 through 19 and FIGs. 43 through 45.

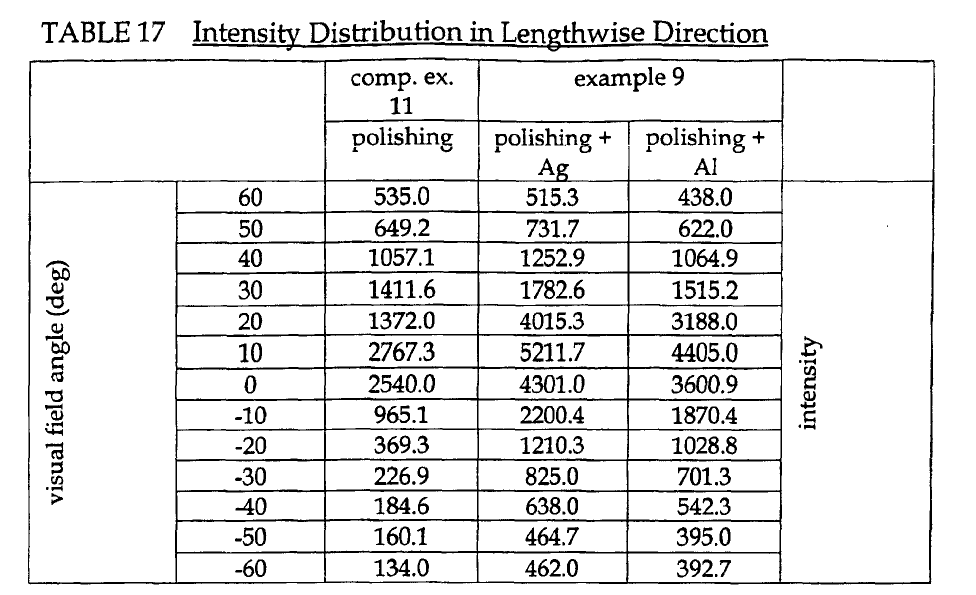

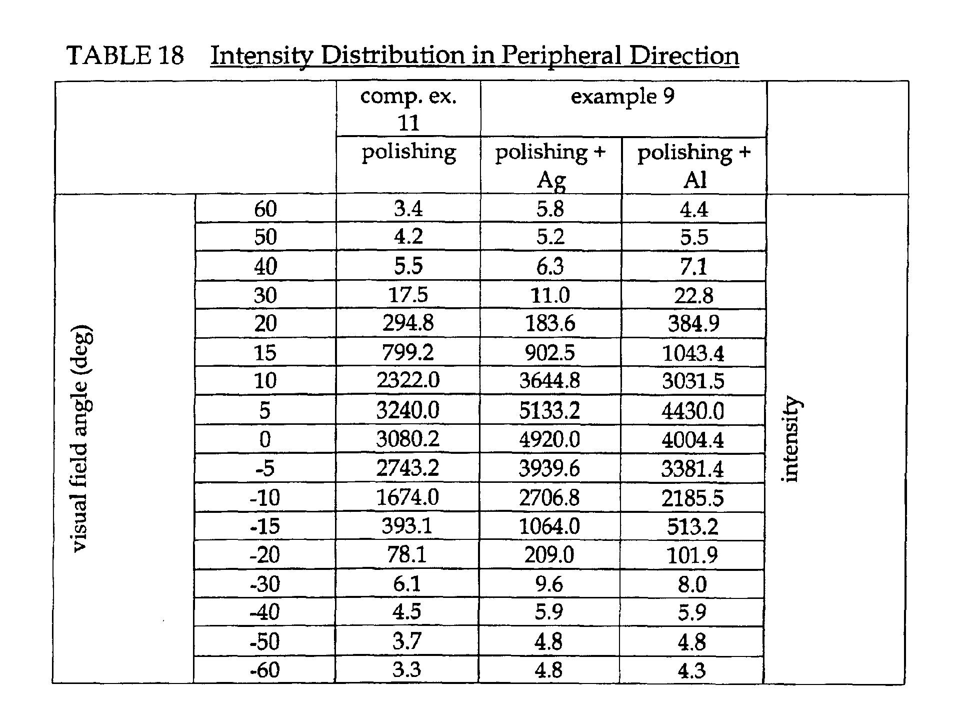

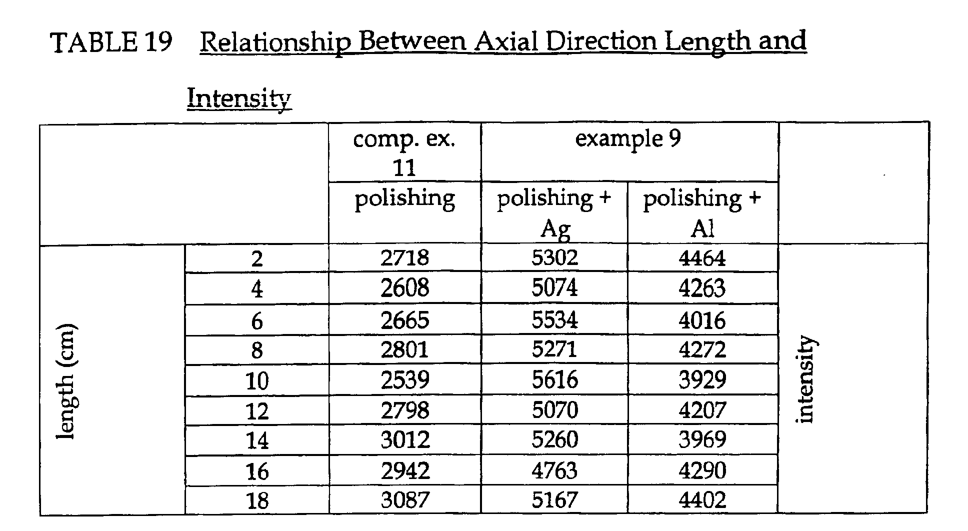

### [Example 10 and Comparative Example 12]

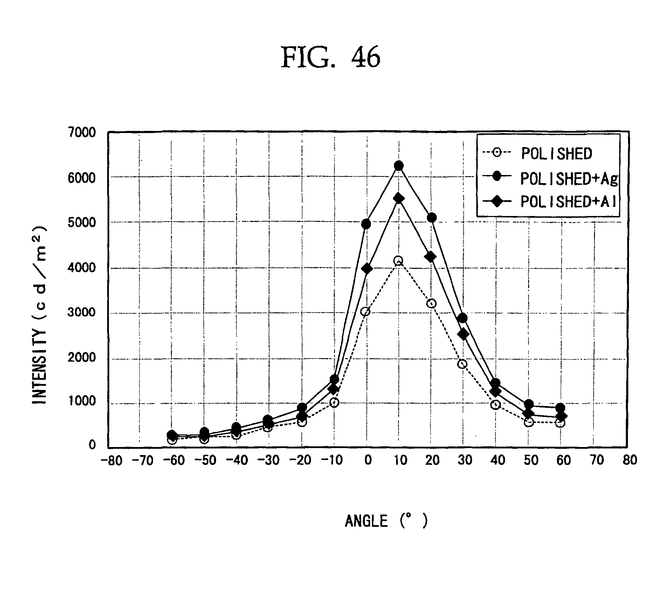

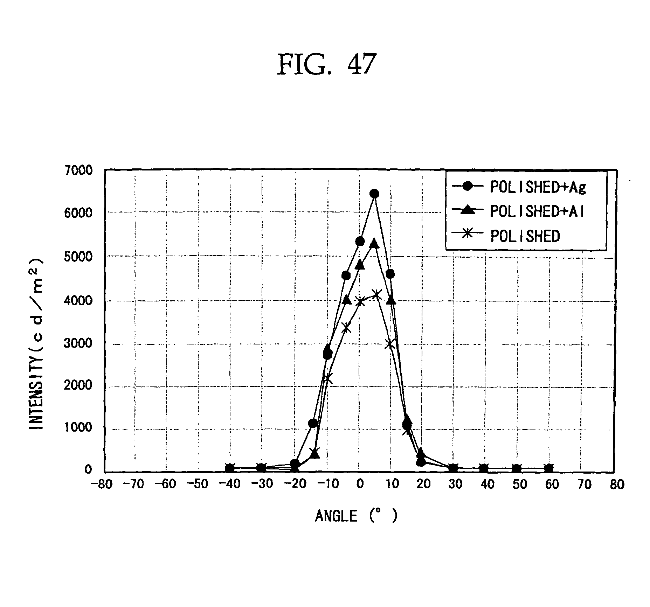

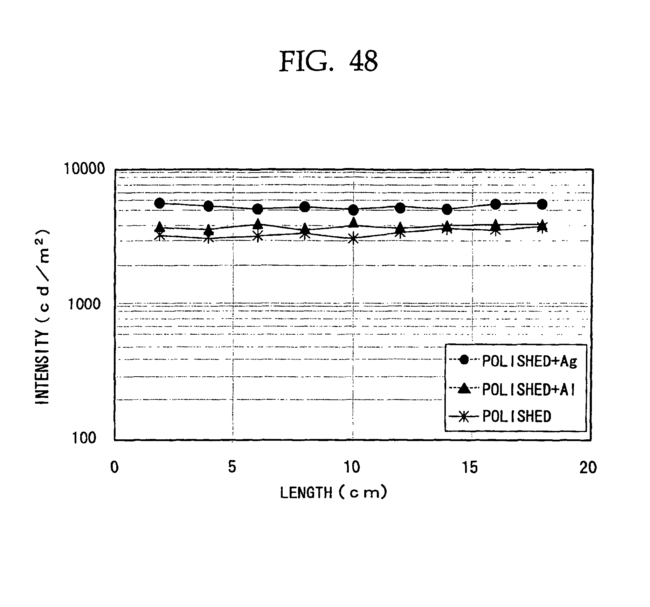

Except that inverted cone-shaped grooves were used as the light reflecting grooves instead of the V-shaped grooves, the same procedures as in Example 9 were carried out, and the intensity distribution in the lengthwise direction, the intensity distribution in the peripheral direction, and the relationship between the axial direction length and the intensity were measured. The results are shown in Tables 20 through 22 and FIGS. 46 through 48.

The inverted cone-shaped grooves have a groove width of 3.0 to 4.0 mm, a groove depth of 0.5 mm, and a groove interval of 3.5 mm. The inverted cone-shaped grooves were polished to a surface roughness (Ra) of 0.2 µm, and structures (Example 10) in which Ag or Al was deposited on the light reflecting surfaces after this polishing, and structures (Comparative Example 12) in which no metal film was formed on the light reflecting surfaces after this polishing, were obtained.

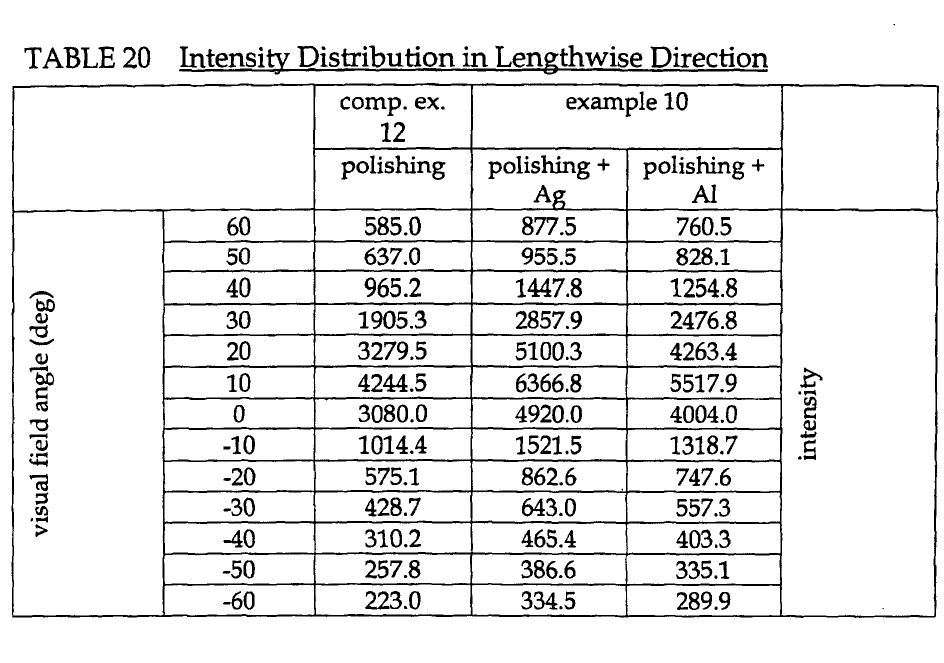

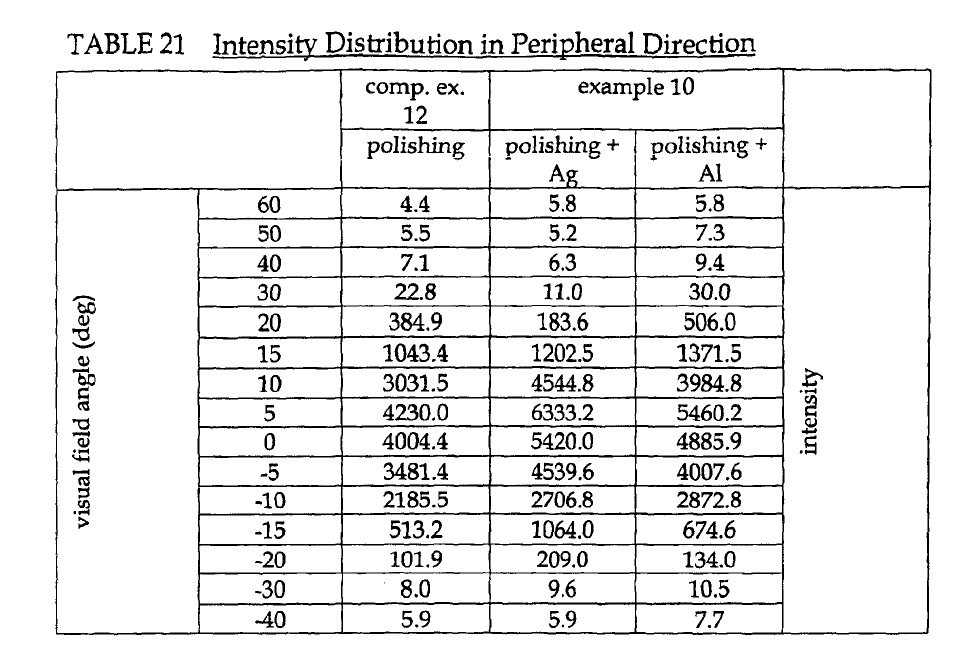

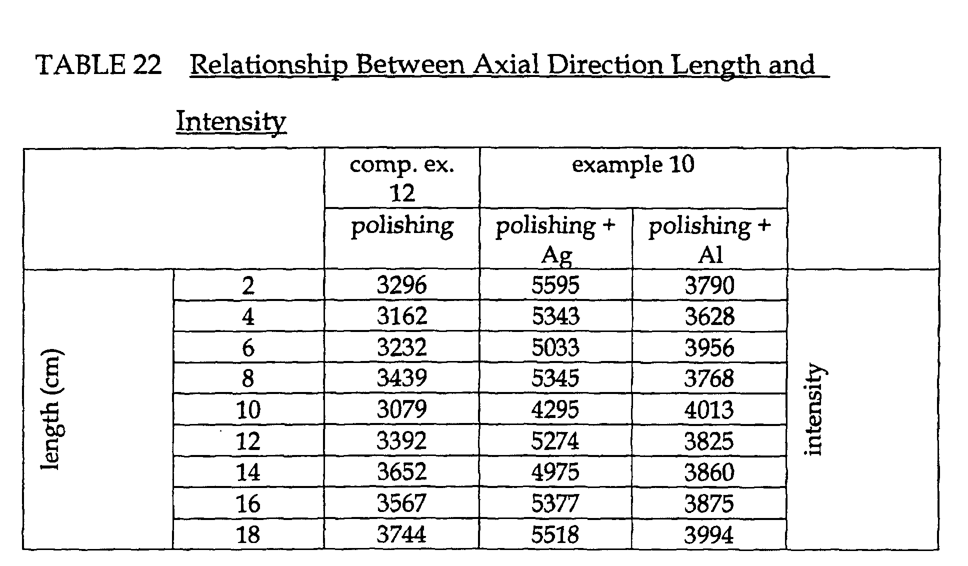

### [Example 11 and Comparative Examples 23,14]

Using a 200 type injection molding device, PMMA (polymethyl methacrylate) pellets were injection molded in a mold for a rod, which mold was φ 14 mm and a length of 20 cm and had convex portions for formation of the light reflecting layer along the lengthwise direction at one portion of the inner surface thereof, at a screw temperature of 220°C to 240°C and a mold temperature of 60°C, and the translucent rod-shaped body was prepared.

57 V-shaped grooves, whose groove widths are 5 mm, groove depths are 0.5 mm, and groove intervals are 3.5 mm, are formed uniformly in the axial direction in the outer peripheral surface of the obtained translucent rod-shaped body.

The translucent rod-shaped body of Example 11, in which a high refraction material (polystyrene) was coated in the V-shaped grooves, was prepared.

Note that a translucent rod-shaped body which did not have grooves and white lines (a reflection preventing layer; SG100, an acrylic urethane coating material containing 33.3 % by mass of TiO₂) was prepared as Comparative Example 13. Further, a translucent rod-shaped body which did not have grooves and had white lines (a reflection preventing layer) was prepared as Comparative Example 14.

With regard to the obtained translucent rod-shaped bodies, 4 LEDs (red color, HPWT-DH00) were used as the light source. When the state of light emission was evaluated with the naked eye, it was recognized that, with Example 11, strong, linear light which had high directivity and was substantially orthogonal to the axial direction was obtained as compared with Comparative Examples 13,14.

In accordance with the present invention, by making the line width of the light reflecting layer appropriate, the angle distribution of the exiting light in the peripheral direction is optimized, strong, linear light which has high directivity and is substantially orthogonal to the peripheral direction is obtained, and a linear light emitter which has excellent stability, heat-resistance, weatherability and cost performance is obtained.

Moreover, in accordance with the manufacturing method of the present invention, by transferring a light reflecting film of a transfer film to a translucent rod-shaped body simultaneously with the injection molding of the translucent rod-shaped body, a process for forming a light reflecting film at a light reflecting groove can be eliminated, and mass production is possible, and cost reduction can be aimed for.

## Claims

1. A linear light emitter comprising:
a translucent rod-shaped body which has a light incident portion at least at one end thereof and which has, on a peripheral side surface running along an axial direction, a light reflecting layer reflecting incident light from the light incident portion,
wherein the translucent rod-shaped body satisfies a following formula, 0.01≤ LW /LC ≤ 0.2, given that a length of an outer periphery of the translucent rod-shaped body is LC (mm) and a line width of the light reflecting layer is LW (mm) in a cross-section orthogonal to an axial direction of the translucent rod-shaped body.

2. A linear light emitter according to Claim 1, wherein the line width of the light reflecting layer gradually increases as a distance from the light incident portion increases.

3. A linear light emitter according to any one of Claims 1 and 2, wherein an intensity of reflected light from the light reflecting layer in a direction orthogonal to a substantial center of the light reflecting layer in the cross-section orthogonal to the axial direction of the translucent rod-shaped body is 200 cd/m² or more.

4. A linear light emitter according to any one of Claims 1 through 3, wherein a configuration of a cross-section of the linear light emitter is either a perfect circle or an oval.

5. A linear light emitter according to any one of Claims 1 through 4, wherein the linear light emitter has a translucent clad whose refractive index is lower than that of the translucent rod-shaped body and which covers the translucent rod-shaped body, and the light reflecting layer formed on the peripheral side surface along the axial direction at the translucent rod-shaped body.

6. A linear light emitter according to any one of Claims 1 through 5, wherein the translucent rod-shaped body comprises an acrylic resin, and the translucent clad comprises a translucent resin having a refractive index lower than that of the translucent rod-shaped body, and the light reflecting layer comprises light scattering particles.

7. A linear light emitter according to any one of Claims 1 through 6, comprising a light reflecting protective layer on the translucent clad so as to cover the light reflecting layer.

8. A linear light emitter comprising:
a translucent rod-shaped body which has a light incident portion at least at one end thereof and which has, on a peripheral side surface running along an axial direction, a light reflecting groove reflecting incident light from the light incident portion,
wherein an angle θ (°) formed by an axis orthogonal to an axial direction of the linear light emitter and a light incident surface at the light reflecting groove is 30 ≤ θ ≤ 60.

9. A linear light emitter according to Claim 8, wherein the angle θ (°) gradually increases as a distance from the light incident portion increases.

10. A linear light emitter according to any one of Claims 8 and 9, wherein the light reflecting groove is one of V-shaped and inverted cone-shaped.

11. A linear light emitter comprising:
a translucent rod-shaped body which has a light incident portion at least at one end and at which a light reflecting groove, which has a light reflecting surface facing the light incident portion, is formed on a peripheral side surface running along an axial direction,
wherein the light reflecting groove has groove walls at both ends of the light reflecting surface.

12. A linear light emitter according to Claim 11, wherein the groove walls are disposed opposingly and parallel to an axial direction of the linear light emitter, at both ends of the light reflecting groove.

13. A linear light emitter according to any one of Claims 11 and 12, wherein the groove walls are positioned in substantially a normal line direction with respect to a groove bottom.

14. A linear light emitter according to any one of Claims 11 through 13, wherein the groove bottom extends in substantially a normal line direction with respect to the axial direction of the linear light emitter.

15. A linear light emitter according to any one of Claims 11 through 14, wherein the light reflecting groove is either of a V-shaped groove or a V-shaped groove whose both end portions are inverted cone-shaped.

16. A linear light emitter comprising:
a translucent rod-shaped body which has a light incident portion at least at one end and at which a light reflecting groove, which has a light reflecting surface facing the light incident portion, is formed on a peripheral side surface running along an axial direction,
wherein a surface roughness (Ra) of the light reflecting surface at the light reflecting groove is 0.5 µm or less.

17. A linear light emitter according to Claim 16, wherein the surface roughness (Ra) of the light reflecting surface at the light reflecting groove is 0.3 µm or less.

18. A linear light emitter according to any one of Claims 16 and 17, wherein the light reflecting groove has groove walls at both ends of the light reflecting surface.

19. A linear light emitter according to any one of Claims 16 through 18, wherein the groove walls are disposed opposingly and parallel to an axial direction of the linear light emitter, at both ends of the light reflecting groove.

20. A linear light emitter according to any one of Claims 16 through 19, wherein the groove walls are positioned in substantially a normal line direction with respect to a groove bottom.

21. A linear light emitter according to any one of Claims 16 through 20, wherein the groove bottom extends in substantially a normal line direction with respect to the axial direction of the linear light emitter.

22. A linear light emitter according to any one of Claims 16 through 21, wherein the light reflecting groove is either of a V-shaped groove or a V-shaped groove whose both end portions are inverted cone-shaped.

23. A linear light emitter comprising:
a translucent rod-shaped body which has a light incident portion at least at one end thereof and at which a light reflecting groove, which has a light reflecting surface facing the light incident portion, is formed on a peripheral side surface running along an axial direction,
wherein a light reflecting film is formed at the light reflecting groove of the translucent rod-shaped body and at a land portion other than the light reflecting groove.

24. A linear light emitter comprising:
a translucent rod-shaped body which has a light incident portion at least at one end thereof and at which a light reflecting groove, which has a light reflecting surface facing the light incident portion, is formed on a peripheral side surface running along an axial direction,
wherein a light reflecting film is formed at the light reflecting surface at the light reflecting groove.

25. A linear light emitter comprising:
a translucent rod-shaped body which has a light incident portion at least at one end thereof and at which a light reflecting groove, which has a light reflecting surface facing the light incident portion, is formed on a peripheral side surface running along an axial direction,
wherein a light reflecting film is formed at the light reflecting surface after polishing at the light reflecting groove.

26. A linear light emitter according to Claim 25, wherein a surface roughness (Ra) of the light reflecting surface after polishing is 1.0 µm or less.

27. A linear light emitter according to any one of Claims 23 through 26, wherein the light reflecting film is a metal film selected from silver, nickel, chromium, iron, titanium, gold, aluminum, and alloys thereof.

28. A linear light emitter according to any one of Claims 23 through 27, wherein the light reflecting groove has groove walls at both ends of the light reflecting surface.

29. A linear light emitter according to any one of Claims 23 through 28, wherein the groove walls are disposed opposingly and parallel to an axial direction of the linear light emitter, at both ends of the light reflecting groove.

30. A linear light emitter according to any one of Claims 23 through 29, wherein the groove walls are positioned in substantially a normal line direction with respect to a groove bottom.

31. A linear light emitter according to any one of Claims 23 through 30, wherein the light reflecting groove is either of a V-shaped groove or a V-shaped groove whose both end portions are inverted cone-shaped.

32. A linear light emitter comprising:
a translucent rod-shaped body which has a light incident portion at least at one end thereof and at which a light reflecting groove, which has a light reflecting surface facing the light incident portion, is formed on a peripheral side surface running along an axial direction,
wherein a material having a refractive index higher than a refractive index of the translucent rod-shaped body is coated on the light reflecting surface at the light reflecting groove.

33. A linear light emitter according to Claim 32, wherein a refractive index difference between the refractive index of the translucent rod-shaped body and the material having a refractive index higher than the refractive index of the translucent rod-shaped body is 0.05 or more.

34. A linear light emitter according to any one of Claims 32 and 33, wherein the high refraction material is selected from polystyrene (PS), polycarbonate (PC), tin-doped indium oxide (ITO), antimony-doped tin oxide (ATO), and aluminum-doped zinc oxide.

35. A linear light emitter according to any one of Claims 32 through 34, wherein the light reflecting groove has groove walls at both ends of the light reflecting surface.

36. A linear light emitter according to any one of Claims 32 through 35, wherein the groove walls are disposed opposingly and parallel to an axial direction of the linear light emitter, at both ends of the light reflecting groove.

37. A linear light emitter according to any one of Claims 32 through 36, wherein the groove walls are positioned in substantially a normal line direction with respect to a groove bottom.

38. A linear light emitter according to any one of Claims 32 through 37, wherein the light reflecting groove is either of a V-shaped groove or a V-shaped groove whose both end portions are inverted cone shaped.

39. A linear light emitter according to any one of Claims 8 through 38, wherein a vertical angle of the light reflecting groove is 60° to 120°.

40. A linear light emitter according to any one of Claims 8 through 39, wherein the linear light emitter has a translucent clad whose refractive index is lower than that of the translucent rod-shaped body and which covers the translucent rod-shaped body.

41. A linear light emitter according to any one of Claims 8 through 40, wherein an intensity of reflected light from the light reflecting groove in a direction opposing the light reflecting groove is 500 cd/m² or more.

42. A linear light emitter according to any one of Claims 8 through 41, wherein a configuration, at a side opposing a light reflecting groove side, in a cross-section in a direction orthogonal to the axial direction is either of a portion of a perfect circle or a portion of an oval.

43. A linear light emitter according to any one of Claims 8 through 42, comprising a light emitter illuminating light to the light incident portion at the translucent rod-shaped body.

44. A linear light emitter according to any one of Claims 1 through 43, wherein the linear light emitter is used as a lamp for a vehicle.

45. A linear light emitter according to any one of Claims 1 through 44, wherein the linear light emitter is multicolor.

46. A method of manufacturing a linear light emitter, comprising the steps of:
inserting a transfer film which comprises a base film and a transferable light reflecting film layer, into an injection molding mold for molding a translucent rod-shaped body of a linear light emitter, which has a configuration corresponding to the translucent rod-shaped body at an interior thereof; and
transferring the light reflecting film layer of the transfer film to the translucent rod-shaped body simultaneously with injection charging of a translucent rod-shaped body material,
wherein the linear light emitter comprises the translucent rod-shaped body which has a light incident portion at least at one end thereof and at which a light reflecting film is formed at a surface on a peripheral side surface running along an axial direction.

47. A method of manufacturing a linear light emitter comprising the steps of:
inserting a transfer film which comprises a base film and a transferable light reflecting film layer, into an injection molding mold for molding a translucent rod-shaped body of a linear light emitter, which has a configuration corresponding to a light reflecting groove of the translucent rod-shaped body at an interior of the injection molding mold; and
transferring the light reflecting film layer of the transfer film to the light reflecting groove of the translucent rod-shaped body simultaneously with injection charging of a translucent rod-shaped body material,
wherein the linear light emitter comprises the translucent rod-shaped body which has a light incident portion at least at one end thereof and which has the light reflecting groove, at whose surface a light reflecting film is formed, on a peripheral side surface running along an axial direction.

48. A method of manufacturing a linear light emitter according to any one of Claims 46 and 47, wherein the light reflecting film is a metal film selected from silver, nickel, chromium, iron, titanium, gold, aluminum, and alloys thereof.
